Europäisches Patentamt

European Patent Office

Office européen des brevets

(19)

(11) **EP 1 287 514 B1**

(12) **FASCICULE DE BREVET EUROPEEN**

(45) Date de publication et mention
de la délivrance du brevet:
**13.10.2004 Bulletin 2004/42**

(21) Numéro de dépôt: **01940674.3**

(22) Date de dépôt: **01.06.2001**

(51) Int Cl.$^7$: **G08G 5/04**

(86) Numéro de dépôt international:
**PCT/FR2001/001714**

(87) Numéro de publication internationale:
**WO 2001/095289 (13.12.2001 Gazette 2001/50)**

(54) **PROCEDE D'ELABORATION D'UNE TRAJECTOIRE D'EVITEMENT DANS LE PLAN HORIZONTAL POUR AERONEF EN VUE DE LA RESOLUTION D'UN CONFLIT DE TRAFIC**

**VERFAHREN ZUR BERECHNUNG EINER AUSWEICHFLUGBAHN FÜR EIN FLUGZEUG IN DER HORIZONTALEN EBENE ZUR AUFLÖSUNG EINES FLUGVERKEHRSKONFLIKTS**

**METHOD FOR WORKING OUT AN AVOIDANCE PATH IN THE HORIZONTAL PLANE FOR AN AIRCRAFT TO RESOLVE A TRAFFIC CONFLICT**

(84) Etats contractants désignés:
**DE FR GB**

(30) Priorité: **09.06.2000 FR 0007453**

(43) Date de publication de la demande:
**05.03.2003 Bulletin 2003/10**

(73) Titulaire: **Thales**
**75008 Paris (FR)**

(72) Inventeurs:
• **SAINTHUILE, Gérard,**
**c/o Thales Intellectual Prop**
**F-94117 Arcueil Cedex (FR)**
• **SOLANS, Christophe, c/o Thales Intellectual Prp**
**F-94117 Arcueil Cedex (FR)**

(74) Mandataire: **Beylot, Jacques et al**
**THALES Intellectual Property,**
**31-33 Avenue Aristide Briand**
**94117 Arcueil Cédex (FR)**

(56) Documents cités:
**EP-A- 0 598 154**      **WO-A-97/47945**

• **EBY M S ET AL: "Free flight separation assurance using distributed algorithms" 1999 IEEE AEROSPACE CONFERENCE. PROCEEDINGS (CAT. NO.99TH8403), 1999 IEEE AEROSPACE CONFERENCE. PROCEEDINGS, SNOWMASS AT ASPEN, CO, USA, 6-13 MARCH 1999, pages 429-441 vol.2, XP002161370 1999, Piscataway, NJ, USA, IEEE, USA ISBN: 0-7803-5425-7**

**Description**

La présente invention concerne la gestion des risques de collision en vol entre aéronefs.

Les risques de collision en vol entre aéronefs ont été pris en considération très tôt dans l'histoire du transport aérien en raison de la concentration d'aéronefs se produisant naturellement aux abords des aéroports. Pour les éviter, on a tout d'abord penser à imposer aux aéronefs le suivi de couloirs aériens strictement délimités dans lesquels leurs progressions sont surveillées depuis le sol par des contrôleurs du trafic aérien ou aiguilleurs du ciel appartenant à des organismes de régulation désignés sous le sigle ATC (de l'anglo-saxon "Air Traffic Control"). Les contrôleurs du trafic aérien ont en charge un territoire au-dessus duquel ils organisent la circulation des aéronefs dans des couloirs aériens autorisés. Pour la régulation du trafic aérien, les contrôleurs au sol ont, à leur disposition, des informations sur la circulation des aéronefs au-dessus de leur territoire provenant des plans de vol des aéronefs communiqués à l'avance, de mesures en temps réels de radars de surveillance aérienne dispersés sur leur territoire et d'échanges en phonie et par transmission de données avec les équipages et équipements de navigation des aéronefs. Les risques de collision entre aéronefs sont détectés au sol par les contrôleurs du trafic aérien à partir des données en leur possession et également en vol par les équipages des aéronefs qui font une veille visuelle mais, sauf extrême urgence, l'initiative des manoeuvres d'évitement est du seul ressort des contrôleurs du trafic aérien.

La densité de trafic augmentant de plus en plus aux abords de certains aéroports et les risques de collision devenant de plus en plus préoccupant, l'administration fédérale de l'aviation des Etats-Unis FAA (de l'anglo-saxon "Federal Aviation Administration") lança dans les années 1960 un programme pour la réalisation d'un équipement de détection automatique de risques de collision en vol destiné, dans un premier temps, aux aéronefs effectuant du transport de passagers. Ce programme aboutit à la mise au point de plusieurs générations successives d'un appareillage dénommé TCAS (de l'anglo-saxon "Traffic Collision Avoidance System") spécialisé dans la détection d'un risque de collision en vol à très court terme (moins d'une minute).

Un appareillage TCAS met en oeuvre une coopération entre aéronefs évoluant dans un même voisinage par l'intermédiaire d'un autre équipement embarqué, le transpondeur, dont l'usage s'était entre temps généralisé à bord des aéronefs pour transmettre au sol, des informations sur les aéronefs permettant d'améliorer leurs localisations par les contrôleurs du trafic aérien.

Une première génération d'appareils TCAS disponible vers l'année 1980, le TCAS I, coopère avec des transpondeurs Mode-C destinés, à l'origine, à répondre à une interrogation d'un radar spécial placé au sol, dit "radar secondaire", pour donner une information sur l'identité et l'altitude de l'aéronef qui le transporte et permettre également une mesure de la distance séparant ledit aéronef du radar secondaire et une mesure de la vitesse dudit aéronef, mesures qui sont basées sur le temps de propagation des signaux radioélectriques et la variation de ce temps de propagation d'une interrogation à l'autre. Placé à bord d'un aéronef, un appareil TCAS I émet périodiquement, des signaux d'interrogation des transpondeurs mode-C des aéronefs évoluant dans le voisinage, capte leurs réponses, traite ces réponses, en déduit les positions en distance et cap, les vitesses et les niveaux d'altitude des différents aéronefs évoluant dans le voisinage de l'aéronef qu'il équipe, met ces informations à disposition de l'équipage par l'intermédiaire d'un écran particulier et engendre des alarmes dites "TA" (de l'anglo-saxon "Traffic Advisories") lorsque des aéronefs sont détectés comme pouvant passer à une distance trop faible. L'équipage d'un aéronef équipé du TCAS I est informé d'un risque de collision mais ne reçoit pas de conseils sur la nature de la manoeuvre évasive à effectuer qui ne peut se faire, sans en référer au contrôleur de trafic aérien, que dans le plan vertical et dans une limite de 300 pieds.

Une deuxième génération d'appareils TCAS plus performants, le TCAS II, est actuellement disponible. Le TCAS II coopère avec des transpondeurs Mode-C ou Mode-S et donne, en plus des alarmes TA, des conseils de manoeuvre dits "RA" (de l'anglo-saxon "Resolution Advisories") consistant en des consignes de monter ou descendre à 2500 pieds par minute pour éviter un autre aéronef, avec souvent une indication de la pente de descente ou de montée minimale à adopter pour faire disparaître le risque de collision. En outre, lorsque deux aéronefs impliqués dans un risque de collision sont tous les deux équipés d'appareils TCAS II, leurs appareils TCAS II s'entendent pour éviter tout conflit et ne pas délivrer aux deux aéronefs, des conseils de manoeuvres simultanées contradictoires ne supprimant pas le risque de collision.

Une troisième génération d'appareils TCAS, le TCAS III, est d'ores et déjà envisagée avec une meilleure précision dans l'évaluation des positions en cap, des trajectoires et des vitesses des autres aéronefs obtenue au moyen d'une antenne directionnelle spécifique et de transpondeurs Mode-S améliorés donnant, dans leurs signaux de réponse, la position GPS (Global Positioning System en langage anglo-saxon) et le vecteur vitesse du porteur du transpondeur. Ces appareils TCAS III délivreraient des conseils de manoeuvre RA incluant des consignes d'évasion latérale, dans le plan horizontal rendues possibles par la meilleure précision attendue.

La congestion des routes aériennes au-dessus de certains territoires comme l'Europe et l'amélioration de la précision des moyens de navigation à la disposition d'un aéronef consécutive au déploiement des systèmes de navigation par satellites GPS tels que le GNSS américain (Global Navigation Satellite System en langage anglo-saxon) ou le GLONASS russe (GLObal Navigation Satellite System en anglo-saxon) conduisent aujourd'hui les autorités de contrôle du trafic aérien à envisager l'abandon, sur certains trajets, de l'obligation de suivre des couloirs aériens préétablis et l'octroi aux aéronefs, d'une certaine liberté dans le choix de leurs parcours en dehors des zones d'approches des aéroports et à certains niveaux de vol. Il s'agit de la technique de navigation dénommée "Free Flight" en langue anglo-saxonne. Cette nouvelle technique de navigation Free Flight doit permettre, en plus d'une meilleure dilution des aéronefs dans le ciel en dehors des zones d'approche des aéroports et par conséquent d'une diminution des risques de collision entre aéronefs, le suivi de trajets en ligne directe (orthodromie) entre des points du globe qui ne sont pas reliés directement par un couloir aérien prédéfini et pour lesquels le suivi de couloirs aériens prédéfinis impose d'effectuer des détours plus ou moins importants.

La technique de navigation Free Flight nécessite non seulement que les aéronefs soient équipés de moyens de navigation précis mais également qu'ils soient capables d'assurer par eux-mêmes la résolution des conflits de trafic avec d'autres aéronefs générateurs de risques de collision à moyen terme, de l'ordre de 5 à 10 minutes, alors que cette résolution est le fait des contrôleurs de trafic aérien dans le cas d'une circulation au sein des couloirs aériens prédéfinis. Il est envisageable de faire assumer la fonction de protection anticollision à moyen terme à bord des aéronefs employant la technique de navigation Free Flight au moyen des dernières générations d'appareils TCAS en augmentant leurs sensibilités de manière à obtenir des alertes anticollision suffisamment précoces, cela d'autant plus que le principal problème rencontré avec les appareils TCAS, qui est celui des fausses alarmes, ne se pose plus au-delà d'une certaine distance des aéroports.

Si un appareil TCAS à sensibilité accrue peut permettre d'alerter un aéronef pratiquant le Free Flight, d'un risque de collision à moyen terme, c'est-à-dire dans un délai de 5 à 10 minutes, et l'avertir que c'est à lui d'effectuer une manoeuvre d'évitement, il n'a pas la possibilité de proposer la modification la plus appropriée de la route de l'aéronef et ne fournit au plus qu'une suggestion de manoeuvre: évitement par le haut, par le bas, par la droite ou la gauche. Cette simple suggestion de manoeuvre, bien adaptée à une situation d'urgence qui est celle d'un risque de collision dans la minute à venir, ne convient pas à la résolution d'un conflit de trafic où le risque de collision n'est qu'à moyen terme, dans un délai de l'ordre de 5 à 10 minutes.

Mis au courant d'un conflit de trafic générant un risque de collision à moyen terme, l'équipage d'un aéronef a le temps de décider par lui-même de la modification de route à adopter pour éliminer le risque de collision, en recherchant le trajet d'évitement dont les conséquences sont les moins préjudiciables au déroutement de la mission de l'aéronef. Dans cette recherche, il privilégiera un détournement de trajet dans le plan horizontal à vitesse constante, le plus court possible, au détriment d'un changement de vitesse ou d'un détournement de trajet dans le plan vertical qui sont plus difficiles à gérer pour l'aéronef et plus perturbants pour le reste du trafic.

Cette recherche du meilleur changement de route permettant de supprimer le risque de collision consécutif à un conflit de trafic signalé est une tâche délicate qui implique une augmentation soudaine de travail de la part de l'équipage alors que celui-ci doit dans le même temps accroître sa vigilance et mener de front une veille visuelle et radio pour situer et entrer en contact avec l'aéronef menaçant. Une aide de la part du calculateur de gestion du vol de l'aéronef serait alors la bienvenue.

Il existe des calculateurs embarqués de gestion du vol capables de modifier, en cours de vol, la route prévue initialement, ceci afin d'éviter, dans le plan horizontal ou dans le plan vertical, une zone reconnue tardivement comme dangereuse, telle qu'une zone orageuse, au prix d'un minimum de conséquences sur la mission de l'aéronef. Cependant, ces calculateurs de gestion du vol utilisent pour la détermination du trajet d'évitement des méthodes qui ne sont pas adaptées au contournement d'une zone se déplaçant avec une vitesse importante comme c'est le cas d'une zone entourant un autre aéronef.

Martin S. EBY et Wallace E. Kelly ont proposé, dans un document intitulé :"Free Flight Separation Assurance Using Distributed Algorithms" 1999 IEEE Aerospace Conference. Proceedings, 429-441 vol.2, un procédé de résolution de conflit de trafic utilisable à bord d'un aéronef, dans le cadre de la technique de navigation Free Flight. Ce procédé, qui peut être mis en oeuvre par le calculateur de gestion du vol de l'aéronef, est basé sur un modèle à champ de potentiel dans lequel les aéronefs sont assimilés à des particules électrisées à charges positives qui se repoussent et leur destination à une charge négative qui les attire. Il consiste, à surveiller, depuis l'aéronef où il est mis en oeuvre (subject aircraft), les éventuels conflits de route avec d'autres aéronefs (obstacle aircraft) en comparant la trajectoire sol prévisible pour le "subject aircraft", estimée au moyen du vecteur vitesse sol $v_{orig}$ du "subject aircraft" avec celles des autres aéronefs évoluant dans la même zone pour repérer ceux qui risquent de passer dans son voisinage et de créer des conflits de route. Lorsqu'un conflit de route est détecté, l'importance de l'intrusion prévisible de l'aéronef menaçant est évaluée au moyen d'une fonction d'intrusion i(t) définie comme la différence entre la distance minimale de séparation souhaitée et la distance minimale de rapprochement estimée ainsi que l'instant t* où cette fonction d'intrusion passe par son maximum, c'est-à-dire où le degré de conflit est maximum. Cet instant t* permet le calcul de la direction de la ligne de séparation des aéronefs et le manque d'espacement $R_A$ au maximum prévisible du conflit qui sont utilisés pour construire un vecteur correctif dit vecteur d'évitement $A_n$ variable en direction et en amplitude, qui est ajouté au vecteur vitesse initiale $v_{orig}$ de l'aéronef pour régler le conflit.

Ce procédé connu a l'inconvénient de résoudre un conflit de route entre aéronefs au prix non seulement d'un changement de direction mais également d'un changement d'amplitude du vecteur vitesse sol de l'aéronef effectuant l'esquive, changement d'amplitude qui oblige à modifier le régime des moteurs de l'aéronef et va à l'encontre du confort et de la gestion optimale des moteurs et de leur consommation.

La présente invention a pour but de lutter contre l'inconvénient précité. Elle a également pour but un procédé d'élaboration d'une trajectoire d'évitement, dans le plan horizontal, pour un aéronef, en vue de la résolution d'un conflit de trafic avec un autre aéronef, qui soit efficace tout en perturbant le moins possible les objectifs de la mission initialement prévue, notamment en terme de retard, confort et consommation, et qui soit facile à intégrer à la route initialement prévue pour un suivi automatique par les systèmes de navigation et de contrôle de l'aéronef, cela afin de simplifier le travail de l'équipage de l'aéronef et réduire considérablement l'accroissement de charge que celui-ci subit en cas d'alerte de risques de collision à moyen terme, avec un autre aéronef.

Elle a pour objet un procédé d'élaboration d'une trajectoire d'évitement, dans un plan horizontal, pour un premier aéronef suivant une première route dite route initiale, en vue de la résolution d'un conflit de trafic avec un deuxième aéronef suivant une deuxième route pouvant être identique à la première, à partir de la connaissance d'une distance minimale de sécurité S à respecter entre deux aéronefs, et des positions $X_1$ et $X_2$ et des vecteurs vitesse horizontale $\overrightarrow{V_1}$ et $\overrightarrow{V_2}$ des deux aéronefs, ledit procédé comportant les étapes suivantes:

- détermination du vecteur $\overrightarrow{V_{rel}}$ de la vitesse horizontale du deuxième aéronef relativement au premier,
- détermination, dans le plan horizontal, d'un cercle de protection $C_1$ autour du premier aéronef avec pour rayon la distance minimale de sécurité S,
- test d'intersection de la droite support du vecteur $\overrightarrow{V_{rel}}$ de la vitesse horizontale du deuxième aéronef par rapport au premier, avec le cercle de protection $C_1$ du premier aéronef, et en cas d'intersection du cercle de protection du premier aéronef par le vecteur $\overrightarrow{V_{rel}}$ de la vitesse horizontale du deuxième aéronef relativement au premier impliquant un risque de collision, c'est-à-dire une tendance pour la distance de séparation entre les deux aéronefs à se réduire jusqu'à passer en dessous de la distance minimale de sécurité S,
- détermination de l'angle $\overrightarrow{\alpha_b} - \overrightarrow{\alpha_c}$ sous lequel le deuxième aéronef voit le cercle de protection $C_1$ du premier aéronef,
- détermination d'un point $P_{SOM}$ de début de manoeuvre d'évitement situé sur la route initiale du premier aéronef et décalé en aval de la position $X_1$ actuelle du premier aéronef,
- détermination d'au moins une nouvelle valeur d'angle de cap $\overrightarrow{\Theta_{1b}}$ et/ou $\overrightarrow{\Theta_{1c}}$ à suivre par le premier aéronef, sans changer de module de vitesse horizontale, pour amener le vecteur $\overrightarrow{V_{rel}}$ de la vitesse horizontale du deuxième aéronef relativement au premier en limite, sur l'un des côtés $\overrightarrow{X_2 b}$, $\overrightarrow{X_2 c}$ de l'angle sous lequel le deuxième aéronef voit le cercle de protection $C_1$ du premier,
- détermination d'au moins une trajectoire d'évitement de risque de collision pour le premier aéronef comportant une première partie d'esquive constituée d'un segment rectiligne ayant pour origine le point $P_{SOM}$ de début de manoeuvre d'évitement, pour cap l'une des nouvelles valeurs d'angle de cap $\Theta_{1b}$ ou $\Theta_{1c}$ obtenues à l'étape précédente et pour fin un point tournant $P_T$ choisi au-delà d'un point $C_{PA1}$ où la distance de séparation entre les deux aéronefs passe par un minimum égal à la distance minimale de sécurité S, et, au-delà du point tournant $P_T$, une deuxième partie de rejointe de la route initiale.

Avantageusement, l'étape de détermination d'au moins une nouvelle valeur d'angle de cap comporte:

- un test portant sur l'angle orienté $\overrightarrow{\varphi_c}$ existant entre, d'une part, le vecteur vitesse horizontale $\overrightarrow{V_2}$ du deuxième aéronef et, d'autre part, celui $\overrightarrow{X_2 c}$ des côtés $\overrightarrow{X_2 b}$, $\overrightarrow{X_2 c}$ de l'angle sous lequel le deuxième aéronef voit le cercle de protection $C_1$ du premier aéronef, dont l'orientation est la plus éloignée de celle du vecteur vitesse horizontale $\overrightarrow{V_2}$ du deuxième aéronef :

$$\overrightarrow{\varphi_c} = (\overrightarrow{V_2}, \overrightarrow{X_2 c})$$

ledit test consistant à vérifier l'inégalité:

$$\left| \sin \overrightarrow{\varphi_c} \right| < \frac{\left\| \overrightarrow{V_1} \right\|}{\left\| \overrightarrow{V_2} \right\|}$$

et,
au cas où cette inégalité n'est pas vérifiée,
- la détermination d'une unique valeur d'angle de cap $\overrightarrow{\Theta_{1b}}$ à suivre par le premier aéronef, sans changer le module de son vecteur vitesse horizontale pour amener le vecteur $\overrightarrow{V_{rel}}$ de la vitesse horizontale du deuxième aéronef relativement au premier sur le côté $\overrightarrow{X_2b}$ de l'angle sous lequel le deuxième aéronef voit le cercle de protection Ci du premier, dont l'orientation est la plus proche de celle du vecteur vitesse horizontale $\overrightarrow{V_2}$ du deuxième aéronef.

au cas où cette inégalité est vérifiée,

- la détermination de deux nouvelles valeurs d'angle de cap $\overrightarrow{\Theta_{1b}}$ et $\overrightarrow{\Theta_{1c}}$ à suivre par le premier aéronef, sans changer son module de vitesse horizontale pour amener le vecteur $\overrightarrow{V_{rel}}$ de la vitesse horizontale du deuxième aéronef relativement au premier sur l'un des côtés $\overrightarrow{X_2b}$, $\overrightarrow{X_2c}$ de l'angle sous lequel le deuxième aéronef voit le cercle de protection Ci du premier, l'une sur l'un $\overrightarrow{X_2b}$ des côtés, l'autre sur l'autre côté $\overrightarrow{X_2c}$.

Avantageusement, dans le cas où plus d'une nouvelle valeur d'angle de cap $\overrightarrow{\Theta_{1b}}$ et $\overrightarrow{\Theta_{1c}}$ à suivre par le premier aéronef, sans changer son module de vitesse horizontale pour amener le vecteur $\overrightarrow{V_{rel}}$ de la vitesse horizontale du deuxième aéronef relativement au premier sur l'un des côtés $\overrightarrow{X_2b}$, $\overrightarrow{X_2c}$ de l'angle sous lequel le deuxième aéronef voit le cercle de protection du premier, ont été déterminées au cours de l'étape de détermination d'au moins une nouvelle valeur d'angle de cap, l'étape de détermination d'au moins une trajectoire d'évitement consiste en la détermination de deux trajectoires d'évitement, une pour chacune des deux nouvelles valeurs d'angle de cap $\overrightarrow{\Theta_{1b}}$ et $\overrightarrow{\Theta_{1c}}$.

Avantageusement, lorsque le procédé d'élaboration d'une trajectoire d'évitement anticollision dans le plan horizontal comporte une étape de détermination d'au moins une trajectoire d'évitement aboutissant à la détermination de plus d'une trajectoire d'évitement, il est complété par une étape supplémentaire de sélection de la trajectoire d'évitement à mettre en oeuvre consistant à choisir parmi les trajectoires d'évitement, celle qui minimise l'allongement de la route initiale du premier aéronef.

Avantageusement, la deuxième partie de rejointe de la route initiale, d'une trajectoire d'évitement, débute, à partir du point tournant $P_T$ marquant la fin de la première partie d'esquive de cette trajectoire d'évitement, par un segment rectiligne suivant un nouveau cap présentant, par rapport au cap de la route initiale, un écart angulaire opposé à celui du segment rectiligne de la première partie d'esquive de ladite trajectoire d'évitement.

Avantageusement, lorsque la deuxième partie de rejointe de la route initiale, d'une trajectoire d'évitement, débute par un segment rectiligne, le point tournant $P_T$ assurant, au sein de ladite trajectoire d'évitement, la transition entre la fin du segment rectiligne de la première partie d'esquive et ce segment rectiligne débutant la deuxième partie de rejointe de la route initiale, est choisi, sur le segment rectiligne de la première partie d'esquive, suffisamment éloigné du point $C_{PA1}$ où la distance de séparation entre les deux aéronefs passe par un minimum égal à la distance minimale de sécurité S pour que la distance de séparation entre les deux aéronefs ne passe pas en dessous de la distance minimale de sécurité S lors du parcours, par le premier aéronef, du segment rectiligne débutant la deuxième partie de rejointe de ladite trajectoire d'évitement.

Avantageusement, le module du demi-angle $\left\|\overrightarrow{\alpha_b}\right\|$ ou $\left\|\overrightarrow{\alpha_c}\right\|$ sous lequel le deuxième aéronef voit le cercle de protection $C_1$ du premier aéronef est déduit de la relation:

$$\left\|\overrightarrow{\alpha_b}\right\| = \left\|\overrightarrow{\alpha_c}\right\| = \arcsin\left(\frac{S}{\left\|\overrightarrow{X_1 X_2}\right\|}\right)$$

Avantageusement, une nouvelle valeur d'angle de cap $\Theta_{1j}$ à suivre par le premier aéronef, sans changer de module de vitesse horizontale, pour amener le vecteur $\overrightarrow{V_{rel}}$ de la vitesse horizontale du deuxième aéronef relativement au premier sur l'un des côtés $\overrightarrow{X_2b}$ ou $\overrightarrow{X_2c}$, dit côté envisagé $\overrightarrow{X_2j}$, de l'angle sous lequel le deuxième aéronef voit le cercle de protection du premier, s'obtient au moyen d'une relation angulaire qui lie cette nouvelle valeur d'angle de cap $\Theta_{1j}$:

- au cap $\overrightarrow{\psi}$ de la droite orientée reliant la position $X_1$ du premier aéronef à la position $X_2$ du deuxième aéronef,
- au demi-angle $\overrightarrow{\alpha_i}$ sous lequel le deuxième aéronef voit le cercle de protection $C_1$ du premier aéronef, orienté de la bissectrice de l'angle constituée par la droite orientée $\overrightarrow{X_2X_1}$ reliant la position $X_2$ du deuxième aéronef à la position $X_1$ du premier aéronef, vers le côté envisagé $\overrightarrow{X_2j}$ de l'angle sous lequel le deuxième aéronef voit le cercle de protection $C_1$ du premier aéronef, et
- à l'angle orienté $\overrightarrow{\gamma_j}$ que fait le côté envisagé $\overrightarrow{X_2j}$ de l'angle sous lequel le deuxième aéronef voit le cercle de protection $C_1$ du premier aéronef, avec le nouveau vecteur $V_1{}^j$ recherché pour la vitesse horizontale du premier aéronef afin d'éliminer un risque de collision,

cette relation angulaire s'exprimant par la relation:

$$\overrightarrow{\Theta_{1j}} = \vec{\psi} + \overrightarrow{\alpha_j} + \overrightarrow{\gamma_j} + 2k\pi$$

sachant

- que k est un entier,
- que le vecteur $\vec{V}_{rel}^{\,j}$ vitesse horizontale du deuxième aéronef par rapport au premier aéronef, lorsqu'il parcourt le côté envisagé $\overrightarrow{X_2j}$ de l'angle sous lequel le deuxième aéronef voit le cercle de protection $C_1$ du premier aéronef, est égal à la différence du vecteur vitesse horizontale $\overrightarrow{V_2}$ du deuxième aéronef et du vecteur recherché $V_1^{\,j}$ pour la vitesse horizontale du premier aéronef, qui, par hypothèse, a le même module que le vecteur vitesse horizontal $\vec{V}_1$ du premier aéronef:

$$\begin{cases} \overrightarrow{V_{rel}^{\,j}} = \overrightarrow{V_2} - \overrightarrow{V_1^{\,j}} \\ \left\| \overrightarrow{V_1^{\,j}} \right\| = \left\| \overrightarrow{V_1} \right\| \end{cases}$$

- que le demi-angle $\alpha_j$ sous lequel le deuxième aéronef voit le cercle de protection $C_1$ du premier aéronef, orienté de la bissectrice de l'angle constituée par la droite orientée $\overrightarrow{X_2X_1}$ reliant la position $X_2$ du deuxième aéronef à la position $X_1$ du premier aéronef, vers le côté envisagé $\overrightarrow{X_2j}$ de l'angle sous lequel le deuxième aéronef voit le cercle de protection $C_1$ du premier aéronef, a pour valeur:

$$\overrightarrow{\alpha_j} = \pm \arcsin\left( \frac{S}{\left\| \overrightarrow{X_1 X_2} \right\|} \right)$$

- que l'angle orienté $\overrightarrow{\gamma_j}$ que fait le côté envisagé $\overrightarrow{X_2j}$ de l'angle sous lequel le deuxième aéronef voit le cercle de protection $C_1$ du premier aéronef, avec le nouveau vecteur $V_1^{\,j}$ recherché pour la vitesse horizontale du premier aéronef afin d'éliminer un risque de collision s'exprime en fonction de l'angle orienté $\overrightarrow{\varphi_j}$ entre d'une part, le vecteur vitesse horizontale $\overrightarrow{V_2}$ du deuxième aéronef, et, d'autre part, le côté envisagé $\overrightarrow{X_2j}$ de l'angle sous lequel le deuxième aéronef voit le cercle de protection $C_1$ du premier aéronef, par la relation:

$$\overrightarrow{\gamma_j} = \arcsin\left( \frac{\left\| \overrightarrow{V_2} \right\|}{\left\| \overrightarrow{V_1} \right\|} \sin\left( \overrightarrow{\varphi_j} \right) \right)$$

(Une absence de définition de l'arcsinus signifiant une impossibilité de détermination de la nouvelle valeur d'angle de cap $\overrightarrow{\Theta_{1j}}$ recherchée.)
et

- que l'angle orienté $\varphi_j$ entre d'une part, le vecteur vitesse horizontale $\overrightarrow{V_2}$ du deuxième aéronef, et, d'autre part, le côté envisagé $\overrightarrow{X_2j}$ de l'angle sous lequel le, deuxième aéronef voit le cercle de protection $C_1$ du premier aéronef, s'exprime par la relation:

$$\overrightarrow{\varphi_j} = \vec{\psi} + \overrightarrow{\alpha_j} - \overrightarrow{\theta_2} + \pi + 2k\pi$$

l'angle orienté $\overrightarrow{\theta_2}$ étant le cap du deuxième aéronef.

Avantageusement, lorsque la deuxième partie de rejointe d'une trajectoire d'évitement débute par un segment rectiligne, le point tournant $P_T$ assurant la liaison entre le segment rectiligne de la première partie d'esquive et le segment rectiligne de début de la deuxième partie de rejointe d'une trajectoire d'évitement est choisi de manière à être atteint par le premier aéronef au bout d'un délai minimum égal à:

$$t_{cpa} = -\left(\frac{\left(\overrightarrow{X_1 X_2}\right)\left(\overrightarrow{V_2} - \overrightarrow{V_1^n}\right)}{\left\|\overrightarrow{V_2} - \overrightarrow{V_1^n}\right\|^2}\right)$$

$\overrightarrow{V_1}^n$ étant le vecteur vitesse horizontale du premier aéronef lorsqu'il parcourt la première partie d'esquive de sa trajectoire d'évitement.

Avantageusement, lorsque la deuxième partie de rejointe d'une trajectoire d'évitement débute par un segment rectiligne, la distance $D_{CPA1}$ séparant, sur le segment rectiligne de la première partie d'esquive d'une trajectoire d'évitement du premier aéronef, la position $C_{PA1}$ où le premier aéronef voit sa distance de séparation avec le deuxième aéronef atteindre un minimum égal à la distance minimale de sécurité S, de la position $P_{SOM}$ du début de la trajectoire d'évitement est tirée de la relation :

$$D_{CPA1} = t_{cpa} \times \left\|\overrightarrow{V_1}\right\|$$

avec :

$$t_{cpa} = -\left(\frac{\left(\overrightarrow{X_1 X_2}\right)\left(\overrightarrow{V_2} - \overrightarrow{V_1^n}\right)}{\left\|\overrightarrow{V_2} - \overrightarrow{V_1^n}\right\|^2}\right)$$

$\overrightarrow{V_1}^n$ étant le vecteur vitesse horizontale du premier aéronef lorsqu'il suit le segment rectiligne de la première partie d'esquive de sa trajectoire d'évitement.

Avantageusement, lorsque la deuxième partie de rejointe d'une trajectoire d'évitement débute par un segment rectiligne, la distance $D_{PT}$ séparant, sur le segment rectiligne de la première partie d'esquive de la trajectoire d'évitement du premier aéronef, la position $C_{PA1}$ où le premier aéronef voit sa distance de séparation avec le deuxième aéronef atteindre un minimum égal à la distance minimale de sécurité, du point tournant $P_T$ marquant la fin du segment rectiligne de la première partie d'une trajectoire d'évitement est tirée de la relation :

$$D_{PT} = t_{PT} \times \left\|\overrightarrow{V_1}\right\|$$

avec :

$$t_{PT} = S \times \tan\left(\frac{\overrightarrow{\chi_{EOM}} - \left(\overrightarrow{\psi_{SOM}} + \pi + \overrightarrow{\alpha_{SOM}}\right)}{2}\right) \times \frac{1}{\left\|\overrightarrow{V_2} - \overrightarrow{V_{1SOM}}\right\|}$$

sachant:

- que $\overrightarrow{\chi_{EOM}}$ est le cap du vecteur vitesse relative du deuxième aéronef par rapport au premier lorsque le premier aéronef entame le segment rectiligne débutant la deuxième partie d'esquive de sa trajectoire d'évitement,

- que $\overrightarrow{\psi_{SOM}}$ est le cap du segment orienté reliant la position du premier aéronef à celle du deuxième aéronef alors que le premier aéronef est au point $P_{SOM}$ de départ de la première partie d'esquive de sa trajectoire d'évitement,
- que $\overrightarrow{\alpha_{SOM}}$, précédemment nommé $\overrightarrow{\alpha_b}$ ou $\overrightarrow{\alpha_c}$, est le demi-angle sous lequel le deuxième aéronef voit le cercle de protection $C_1$ du premier aéronef alors que le premier aéronef est au point de départ $P_{SOM}$ de la première partie d'esquive de sa trajectoire d'évitement, ce demi-angle étant orienté du segment orienté reliant la position du deuxième aéronef à celle du premier aéronef vers le côté de l'angle sous lequel le deuxième aéronef voit le cercle de protection $C_1$ du premier aéronef, adopté pour faire passer la trajectoire du deuxième aéronef relativement au premier lorsque celui-ci décrit le segment rectiligne de la première partie d'esquive de sa trajectoire d'évitement, et
- que $\overrightarrow{V_{1\,SOM}}$ est le vecteur vitesse horizontale adopté par le premier aéronef lorsqu'il suit le segment rectiligne débutant la deuxième partie de rejointe, de sa trajectoire d'évitement.

D'autres caractéristiques et avantages de l'invention ressortiront de la description ci-après d'un mode de réalisation de l'invention donné à titre d'exemple. Cette description sera faite en regard du dessin dans lequel:

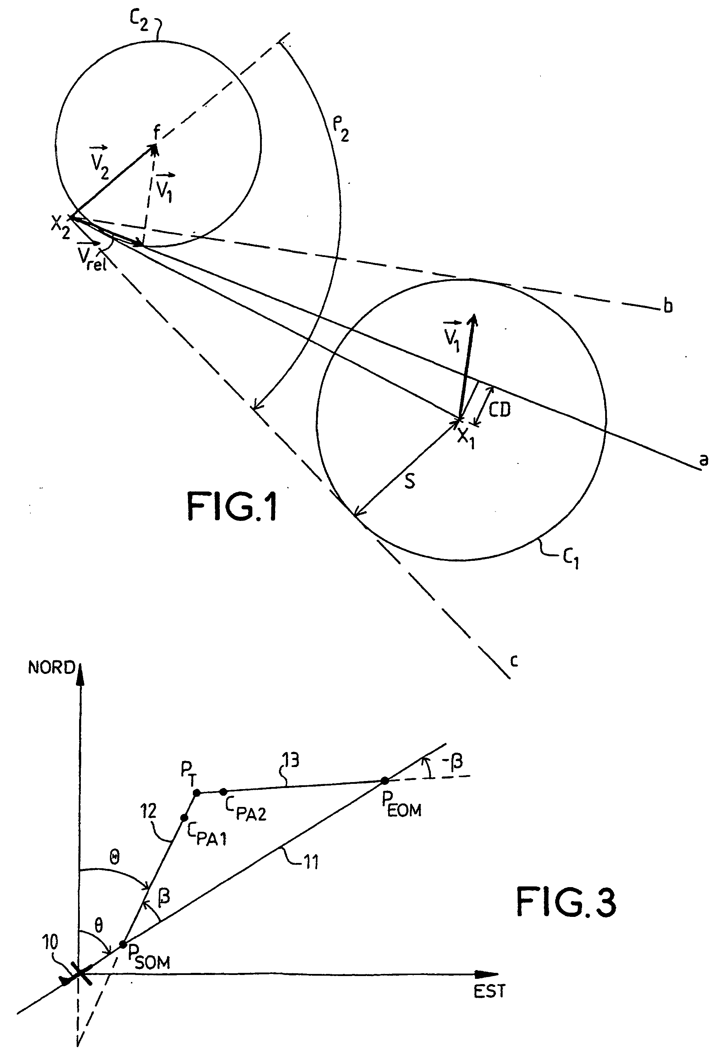

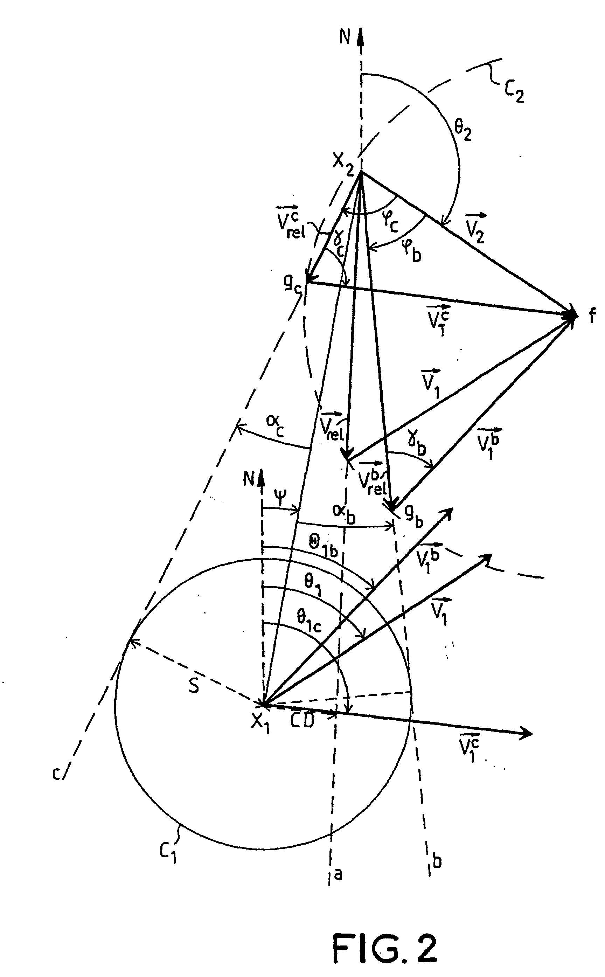

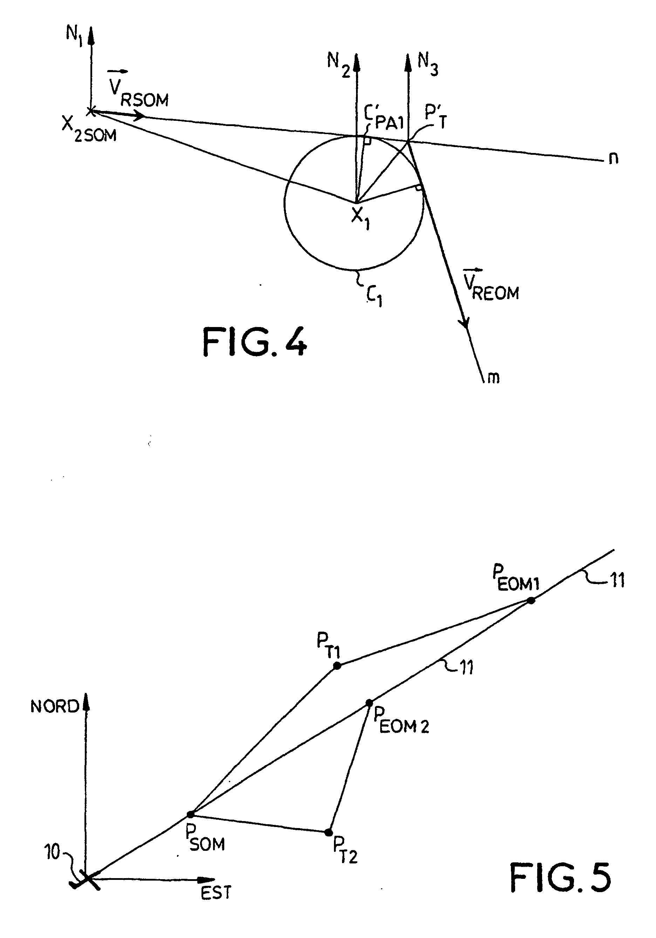

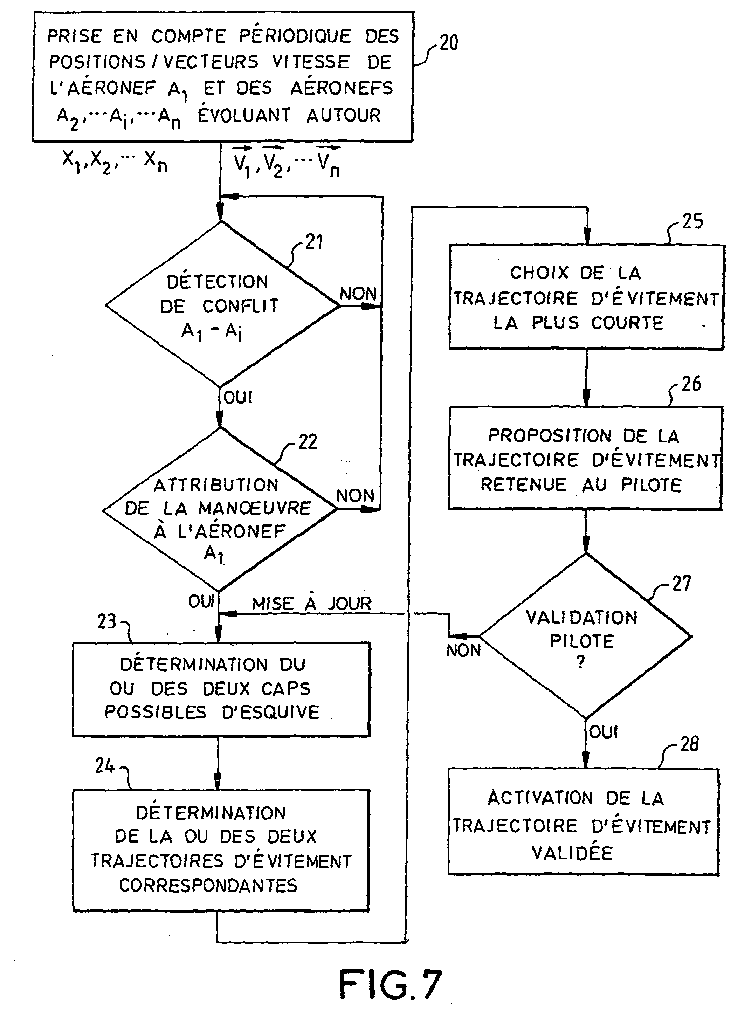

- une figure 1 est un graphe illustrant, de manière générale, une situation où se présente un risque de collision à moyen terme, entre deux aéronefs,
- une figure 2 est un graphe reprenant l'essentiel des éléments du graphe de la figure 1, complétés par des repérages d'angles orientés et par des vecteurs facilitant la compréhension de l'invention,
- une figure 3 est un graphe illustrant la forme d'une trajectoire d'évitement selon l'invention, permettant à un aéronef décrivant une portion rectiligne d'une route prévue initialement, de résoudre un conflit de trafic avec un autre aéronef puis de rejoindre sa route prévue initialement,
- une figure 4 est un graphe explicitant la détermination d'une trajectoire d'évitement dans le cas où l'aéronef, qui doit se détourner de sa route et la suivre, avait initialement, une route rectiligne,
- une figure 5 est une graphe illustrant le choix d'une trajectoire d'évitement au cas où deux trajectoires d'évitement sont possibles,

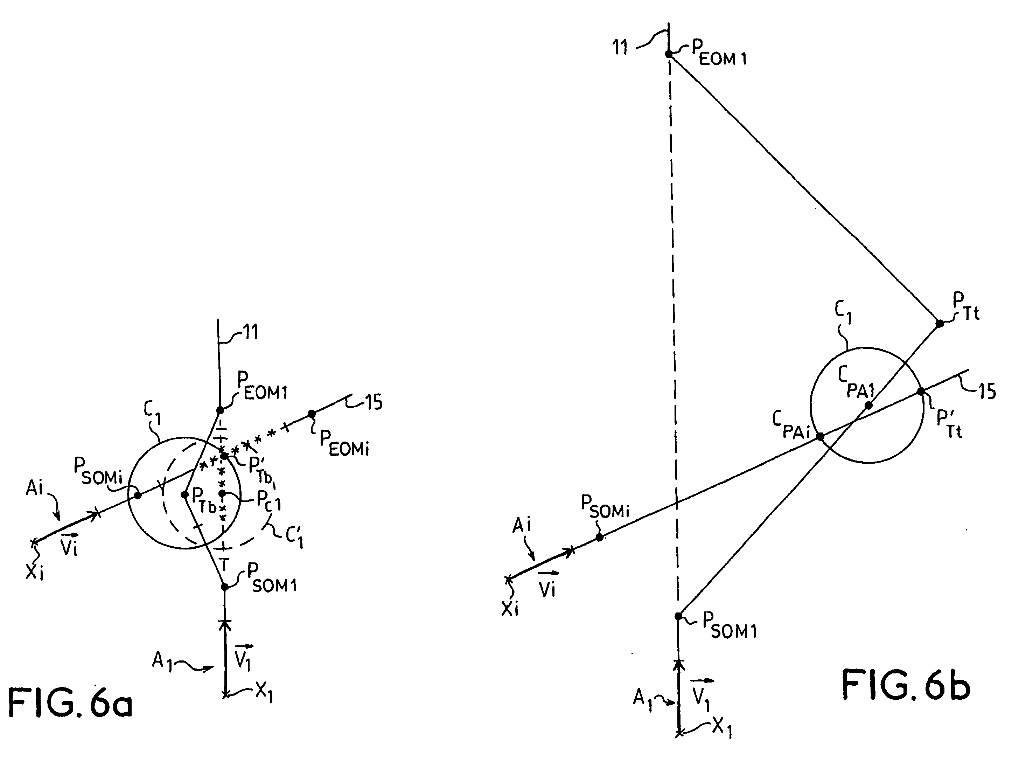

- les figures 6a et 6b sont des graphes montrant un cas pratique de résolution d'une situation de conflit de trafic entre deux aéronefs lorsque l'un d'entre eux adopte une trajectoire d'évitement élaborée en suivant le procédé selon l'invention, et
- une figure 7 est un organigramme résumant les principales étapes du procédé selon l'invention.

Il y a risque de collision lorsque deux aéronefs ont tendance à trop se rapprocher. Ce risque peut s'apprécier en traçant autour d'un aéronef un volume de protection dans lequel l'autre aéronef ne doit pas s'aventurer. Plus le volume de protection est grand moins le risque toléré de collision est élevé. Pour définir le volume de protection, on se base plutôt sur le temps mis par l'aéronef protégé pour parcourir les distances qui le séparent, dans les différentes directions, des frontières de ce volume, ce qui donne à ce volume de protection une forme dépendant des capacités d'évolution de l'aéronef considéré. Cependant, on considère dans la suite, pour simplifier, que ce volume de protection a, dans le plan horizontal, une section circulaire centrée sur l'aéronef car il est toujours possible d'inscrire la section horizontale d'un volume de protection de forme quelconque dans un tel cercle.

En outre, pour estimer un risque d'intrusion d'un deuxième aéronef dans le volume de protection d'un premier aéronef, on prend en considération le fait que les aéronefs suivent en général, des routes préétablies constituées d'un enchaînement de segments droits parcourus à vitesses constantes et réunis par des points de virage, de sorte qu'ils ont, sur la majeure partie de leur trajet, un vecteur vitesse constant à court et moyen terme. La surveillance du risque de collision revient alors à déduire de la connaissance, à chaque instant, des positions et des vecteurs vitesse des aéronefs évoluant dans un même voisinage, leurs positions relatives dans un avenir proche en admettant qu'ils conservent les mêmes vecteurs vitesse, et à intervenir si ces positions relatives prévisibles conduisent certains aéronefs à pénétrer dans le volume de protection d'autres aéronefs.

Les aéronefs d'une certaine taille, sont de plus en plus équipés d'un équipement embarqué de prévention des risques imminents de collision connu sous le nom de TCAS. Les appareils TCAS prévoient, à court terme, la circulation aérienne autour des aéronefs qu'ils équipent en se basant, pour les plus modernes, sur la connaissance des positions et vecteurs vitesse des aéronefs évoluant à proximité qu'ils obtiennent par coopération entre aéronefs, et sur l'hypothèse précédemment évoquée d'une constance à court terme des vecteurs vitesse. Dès qu'un appareil TCAS détecte, dans le voisinage de l'aéronef qu'il équipe, un autre aéronef dont le vecteur vitesse relatif est orienté de façon à traverser le volume de protection de l'aéronef qu'il équipe, celui-ci émet une alarme de risque de collision avec indication du cap par où provient la menace de collision et, éventuellement, procède à une résolution du conflit consistant en la désignation de celui des deux aéronefs qui doit effectuer une manoeuvre évasive et en un conseil à cet aéronef sur la nature de la manoeuvre évasive à effectuer tel que monter, descendre, obliquer à droite ou à gauche.

Il est envisagé de libérer certains niveaux de vol de l'obligation de suivre des routes imposées pour permettre une augmentation du trafic sans augmenter les densités d'aéronefs en dehors des zones d'approche des aéroports. C'est la technique de vol dite "Free Flight". Cette technique de vol Free Flight, qui laisse un aéronef maître de sa route dès qu'il a atteint un certain niveau de vol, nécessite une protection anticollision embarquée renforcée efficace non seulement à court terme mais aussi à moyen terme puisque les conflits de route à moyen terme entre les aéronefs pratiquant le Free Flight ne sont plus résolus par un guidage au sol. Ce renforcement de la protection anticollision peut être assuré par des appareils TCAS à sensibilité accrue, cela d'autant plus que le principal problème rencontré par un appareil TCAS qui est celui des fausses alarmes est beaucoup moins aigu en technique de vol Free Flight du fait que cette dernière n'est envisagée qu'en dehors des zones d'approche des aéroports et au-dessus d'une certaine altitude.

L'équipage d'un aéronef a beaucoup plus de liberté dans le choix d'une manoeuvre d'évasive pour éviter un risque de collision à moyen terme qu'un risque de collision à court terme avec un autre aéronef. Cela lui permet de préférer les détournements de route dans le plan horizontal aux détournements de route dans le plan vertical qui sont plus difficiles à gérer. Cependant, même dans le plan horizontal, les possibilités de choix de détournement de route sont très nombreuses et il n'est pas évident de trouver parmi toutes ces possibilités, celle qui est la plus avantageuse pour le suivi des objectifs de la mission, respect des horaires d'arrivée, minimisation de la surconsommation de carburant, confort des passagers, etc.

Averti d'un risque de collision à moyen terme et de la nécessité d'un déroutement, par un appareil embarqué du genre TCAS à sensibilité accrue, l'équipage d'un aéronef se trouve en face d'une importante surcharge de travail alors qu'il doit assurer parallèlement une veille visuelle pour repérer l'aéronef menaçant. En outre, une fois que la trajectoire de déroutement a été élaborée par l'équipage de l'aéronef, elle doit être mise en oeuvre sans tarder par pilotage manuel, ce qui implique une déconnexion du pilote automatique qui assure normalement, sous le contrôle d'un calculateur de gestion du vol, le suivi automatique de la route prévue initialement et qui ne peut être reconnecté qu'en fin de la manoeuvre de déroutement, lorsque l'aéronef a retrouvé sa route initiale.

On propose ici un procédé pour élaborer une trajectoire d'évitement, dans le plan horizontal, en vue de la résolution d'un conflit de trafic, qui impose un minimum de détour par rapport à la route initiale pour faire cesser le risque de collision et qui puisse être mis en oeuvre par un calculateur de gestion de vol, de sorte que l'équipage de l'aéronef ait toujours à sa disposition, en cas d'une détection d'un conflit de trafic avec un autre aéronef, une proposition de modification de sa route éliminant le risque de collision, apportant un minimum de perturbations au plan de vol initial et pouvant être prise en compte immédiatement par un pilote automatique.

La figure 1 illustre, dans un plan horizontal, selon un repère relatif lié à un premier aéronef, une situation, à un instant donné, de risque de collision avec un deuxième aéronef, étant supposé par ailleurs que l'écart entre les niveaux de vol des deux aéronefs est insuffisant pour éliminer tout risque de collision. Le premier aéronef, auquel est lié le repère d'orientation, a une position arbitraire fixe $X_1$ dans le plan horizontal et un vecteur vitesse horizontale $\overrightarrow{V_1}$ tandis que le deuxième aéronef a, dans le plan horizontal, une position mobile $X_2$ et un vecteur vitesse horizontal $\overrightarrow{V_2}$. Par hypothèse, le premier aéronef, auquel est lié le plan horizontal de représentation, est celui à qui incombe la manoeuvre d'évitement, le choix de celui des deux aéronefs qui doit effectuer la manoeuvre d'évitement étant déterminé par l'application de règles de navigation qui ressortent de l'organisation du trafic aérien et qui ne sont pas du domaine de la présente invention. Le premier aéronef est entouré d'un volume de protection dont la section dans le plan horizontal de la figure 1 est un cercle $C_1$ centré en $X_1$ et ayant pour rayon une distance minimum de séparation S que l'on souhaite voir respecter et qui est choisie supérieure ou égale à la norme imposée par la réglementation aérienne pour la sécurité du trafic lorsqu'une telle norme existe.

Le vecteur vitesse horizontale $\overrightarrow{V_{rel}}$ du deuxième aéronef par rapport au premier est égal à la différence vectorielle entre le vecteur vitesse horizontale $\overrightarrow{V_2}$ du deuxième aéronef et le vecteur vitesse horizontale $\overrightarrow{V_1}$ du premier aéronef:

$$\overrightarrow{V_{rel}} = \overrightarrow{V_2} - \overrightarrow{V_1}$$

Il est porté par une droite orientée $\overrightarrow{X_2a}$ qui intercepte le cercle de protection $C_1$ du premier aéronef et qui passe à une distance CD du centre $X_1$ de ce cercle $C_1$ inférieure à la distance minimum de séparation convenue S.

Avec l'hypothèse communément admise pour les aéronefs civils, de vecteurs vitesse horizontale constants à court et moyen termes, le deuxième aéronef conserve le même vecteur vitesse horizontale $\overrightarrow{V_{rel}}$ relativement au premier aéronef sur un délai suffisant pour être assuré que, si rien n'est fait, il suivra pour trajectoire, la droite orientée $\overrightarrow{X_2a}$ et passera à une distance minimum CD du premier aéronef, inférieure à la distance minimum convenue S. Il y a donc un risque de collision supérieur à celui que l'on était prêt à assumer en fixant la distance minimum à la valeur S. Pour éviter ce risque de collision, il faut, par une manoeuvre du premier aéronef, amener la trajectoire du deuxième aéronef relativement au premier en dehors de l'angle sous lequel le deuxième aéronef voit le cercle de protection $C_1$ du premier. Comme on limite la manoeuvre du premier aéronef à un simple changement d'orientation de son vecteur vitesse horizontale $\overrightarrow{V_1}$, la résolution du risque de collision revient à déterminer le ou les changements possibles de cap à appliquer au premier aéronef pour amener la trajectoire du deuxième aéronef relativement au premier en dehors de l'angle sous lequel le deuxième aéronef voit le cercle de protection $C_1$ du premier, c'est-à-dire au minimum sur les tangentes $\overrightarrow{X_2b}$ ou $\overrightarrow{X_2c}$ au cercle de protection $C_1$ du premier aéronef tracées depuis la position $X_2$ du deuxième aéronef considérée au début d'une manoeuvre d'évitement.

Il est toujours possible, en conservant invariant le module $\left\|\overrightarrow{V_1}\right\|$ du vecteur vitesse horizontale du premier aéronef mais en modifiant son orientation, d'amener le vecteur vitesse horizontale du deuxième aéronef relativement au premier sur celui $\overrightarrow{X_2b}$ des côtés de l'angle sous lequel le deuxième aéronef voit le cercle de protection $C_1$ du premier présentant le plus petit écart angulaire avec le vecteur vitesse horizontale $\overrightarrow{V_2}$ du deuxième aéronef. En effet, ce côté $\overrightarrow{X_2b}$ de l'angle sous lequel le deuxième aéronef voit le cercle de protection $C_1$ du premier aéronef est toujours coupé par le cercle $C_2$ ayant pour centre le point d'extrémité f du vecteur vitesse horizontale $\overrightarrow{V_2}$ du deuxième aéronef lié à la position $X_2$ de ce deuxième aéronef et pour rayon le module du vecteur vitesse horizontaie $\overrightarrow{V_1}$ du premier aéronef car il est plus proche du cercle $C_2$ que la droite orientée $\overrightarrow{X_2a}$ qui porte initialement le vecteur vitesse horizontale $\overrightarrow{V_{rel}}$ du deuxième aéronef relativement au premier et qui est déjà coupée par ce cercle $C_2$.

Par contre, il n'est pas toujours possible, en conservant invariant le module $\left\|\overrightarrow{V_1}\right\|$ du vecteur vitesse horizontale du premier aéronef mais en modifiant son orientation, d'amener le vecteur vitesse horizontale du deuxième aéronef relativement au premier sur le côté $\overrightarrow{X_2c}$ de l'angle sous lequel le deuxième aéronef voit le cercle de protection $C_1$ du premier, qui présente le plus grand écart angulaire par rapport au vecteur vitesse horizontale $\overrightarrow{V_2}$ du deuxième aéronef. En effet, le cercle $C_2$ ayant pour centre le point d'extrémité f du vecteur vitesse horizontale $\overrightarrow{V_2}$ du deuxième aéronef lié à la position $X_2$ du deuxième aéronef et pour rayon le module du vecteur vitesse horizontal $\overrightarrow{V_1}$ du premier aéronef, ne coupe ce côté $\overrightarrow{X_2c}$ que si sa distance à ce côté $\overrightarrow{X_2c}$ est inférieure à son rayon. Cela n'a lieu que si le sinus de l'angle orienté $\overrightarrow{\varphi_c}$ entre le vecteur vitesse horizontale $\overrightarrow{V_2}$ du deuxième aéronef et le côté $\overrightarrow{X_2c}$ de l'angle sous lequel le deuxième aéronef voit le cercle de protection $C_1$ du premier aéronef est inférieur au rapport du module du vecteur vitesse horizontale $\overrightarrow{V_1}$ du premier aéronef sur le module du vecteur vitesse horizontale $\overrightarrow{V_2}$ du deuxième aéronef, c'est-à-dire si l'inégalité suivante est vérifiée:

$$\left|\sin \overrightarrow{\varphi_c}\right| < \frac{\left\|\overrightarrow{V_1}\right\|}{\left\|\overrightarrow{V_2}\right\|} \tag{1}$$

On verra par la suite que la vérification explicite de cette inégalité n'est pas indispensable car elle se fait de manière implicite au cours d'une tentative de détermination d'un cap d'évasive pour le premier aéronef permettant d'amener le vecteur vitesse horizontale du deuxième aéronef relativement au premier sur le côté $\overrightarrow{X_2c}$ de l'angle sous lequel le deuxième aéronef voit le cercle de protection C du premier, qui présente le plus grand écart angulaire par rapport au vecteur vitesse horizontale $\overrightarrow{V_2}$ du deuxième aéronef. En effet, au cours d'une telle tentative, la non vérification de cette inégalité conduit à une impossibilité de calcul.

La figure 2 est une figure géométrique illustrant la résolution d'un cas de risque de collision avec, pour le premier aéronef, deux possibilités de cap d'évasive $\overrightarrow{\Theta_{1b}}$ et $\overrightarrow{\Theta_{1c}}$ amenant l'une et l'autre, le deuxième aéronef à passer en dehors de l'angle sous lequel il voit le cercle de sécurité $C_1$ du premier aéronef, soit sur le côté $\overrightarrow{X_2b}$ de l'angle sous lequel le deuxième aéronef voit le cercle de protection $C_1$ du premier aéronef, orienté au plus proche de son vecteur vitesse horizontale $\overrightarrow{V_2}$, soit sur le côté $\overrightarrow{X_2c}$ de l'angle sous lequel le deuxième aéronef voit le cercle de protection $C_1$ du premier aéronef orienté au plus éloigné de son vecteur vitesse horizoniale $\overrightarrow{V_2}$.

Le vecteur vitesse horizontale du deuxième aéronef relativement au premier aéronef est toujours égal à la différence vectorielle entre le vecteur vitesse horizontale du deuxième aéronef $\overrightarrow{V_2}$ qui ne change pas puisque ce deuxième aéronef n'est pas supposé faire de manoeuvre, et le vecteur vitesse horizontale du premier aéronef qui conserve un module $\left\|\overrightarrow{V_1}\right\|$ constant mais dont l'orientation varie en fonction des changements de cap effectués par le premier aéronef pour résoudre les risques de collision.

Avant une manoeuvre d'évitement du premier aéronef, le vecteur vitesse horizontal du deuxième aéronef relativement au premier $\overrightarrow{V_{rel}}$ est égal à la différence vectorielle entre le vecteur vitesse horizontale $\overrightarrow{V_2}$ du deuxième aéronef et le vecteur vitesse horizontale initial $\overrightarrow{V_1}$ du premier aéronef:

$$\overrightarrow{V_{rel}} = \overrightarrow{V_2} - \overrightarrow{V_1}$$

Après une manoeuvre d'évitement de la part du premier aéronef permettant de faire passer la trajectoire du deuxième aéronef sur le côté $\overrightarrow{X_2b}$ de l'angle sous lequel il voit le cercle de sécurité $C_1$ du premier aéronef, côté qui est orienté au plus proche de son vecteur vitesse horizontale $\overrightarrow{V_2}$, le deuxième aéronef doit avoir, relativement au premier, un vecteur vitesse horizontale $V_{rel}^b$ qui d'une part, est porté par le côté $X_2b$ de l'angle sous lequel le deuxième aéronef voit le cercle de protection $C_1$ du premier aéronef et qui d'autre part, résulte de la différence vectorielle entre le vecteur vitesse horizontale $\overrightarrow{V_2}$ inchangé du deuxième aéronef et le nouveau vecteur vitesse horizontale $\overrightarrow{V_1^b}$ adopté par le premier aéronef après la manoeuvre d'évitement qui ne se distingue du vecteur vitesse horizontale initial $\overrightarrow{V_1}$ du premier aéronef que par son orientation:

$$\overrightarrow{V_{rel}^b} = \overrightarrow{V_2} - \overrightarrow{V_1^b}$$

Le nouveau vecteur vitesse horizontale $V_{rel}^b$ du deuxième aéronef par rapport au premier, après exécution de la manoeuvre d'évitement par le premier, s'obtient facilement par construction géométrique. En effet lorsqu'il est lié à l'emplacement $X_2$ du deuxième aéronef, son extrémité est nécessairement au point de croisement de la droite orientée $\overrightarrow{X_2 b}$ et du cercle $C_2$ centré à l'extrémité f d'un vecteur lié $\overrightarrow{X_2 f}$ égal au vecteur vitesse horizontale $\overrightarrow{V_2}$ du deuxième aéronef et de rayon égal au module du vecteur vitesse horizontale $\overrightarrow{V_1}$ du premier aéronef. La même construction géométrique donne le nouveau vecteur vitesse horizontale $V_1^b$ du premier aéronef après sa manoeuvre d'évitement.

De la même façon, après une manoeuvre d'évitement de la part du premier aéronef permettant de faire passer la trajectoire du deuxième aéronef sur l'autre côté $\overrightarrow{X_2 c}$ de l'angle sous lequel il voit le cercle de sécurité du premier aéronef, côté qui est orienté au plus éloigné de son vecteur vitesse horizontale $\overrightarrow{V_2}$, le deuxième aéronef doit avoir, relativement au premier, un vecteur vitesse horizontale $\overrightarrow{V_{rel}^c}$ qui d'une part, est porté par le côté $X_2 c$ de l'angle sous lequel le deuxième aéronef voit le cercle de protection $C_1$ du premier aéronef et qui d'autre part, résulte de la différence vectorielle entre le vecteur vitesse horizontale $\overrightarrow{V_2}$ inchangé du deuxième aéronef et le nouveau vecteur vitesse horizontale $V_1^c$ adopté par le premier aéronef après la manoeuvre d'évitement qui ne se distingue du vecteur vitesse horizontale initial $\overrightarrow{V_1}$ du premier aéronef que par son orientation:

$$\overrightarrow{V_{rel}^c} = \overrightarrow{V_2} - \overrightarrow{V_1^c}$$

Le nouveau vecteur vitesse horizontale $\overrightarrow{r_{rel}^c}$ du deuxième aéronef par rapport au premier, après exécution de la manoeuvre d'évitement par le premier, s'obtient également par construction géométrique. En effet lorsqu'il est lié à l'emplacement $X_2$ du deuxième aéronef, son extrémité est nécessairement au point de croisement de la droite orientée $\overrightarrow{X_2 c}$ et du cercle $C_2$ centré à l'extrémité f d'un vecteur lié $\overrightarrow{X_2 f}$ égal au vecteur vitesse horizontale $\overrightarrow{V_2}$ du deuxième aéronef et de rayon égal au module du vecteur vitesse horizontale $\overrightarrow{V_1}$ du premier aéronef. La même construction géométrique donne le nouveau vecteur vitesse horizontale $V_1^c$ du premier aéronef après sa manoeuvre d'évitement.

La détermination des nouveaux caps $\overrightarrow{\Theta_{1b}}$ et $\overrightarrow{\Theta_{1c}}$ que doit prendre le premier aéronef après l'une ou l'autre des manoeuvres d'évitement effectuées pour faire passer la trajectoire du deuxième aéronef sur l'un ou l'autre des côtés de l'angle sous lequel il voit le cercle de protection $C_1$ du premier aéronef peut se faire par construction géométrique à partir de la seule connaissance de la distance minimum de séparation admise S pour deux aéronefs et des positions $X_1$ et $X_2$ et vecteurs vitesse horizontale $\overrightarrow{V_1}$ et $\overrightarrow{V_2}$ des premier et deuxième aéronefs.

Les informations relatives à la propre position $X_1$ et au propre vecteur vitesse horizontale $\overrightarrow{V_1}$ d'un aéronef lui sont fournies par ses équipements de navigation de bord. Celles relatives aux positions $X_2$ et vecteurs vitesse horizontale $\overrightarrow{V_2}$ des autres aéronefs évoluant dans le voisinage d'un aéronef peuvent être obtenues à bord de cet aéronef par une technique de coopération entre aéronefs, chaque aéronef transmettant aux autres ses position et vecteur vitesse horizontale (voire à terme, la position et son heure de passage au prochain point tournant) comme c'est le cas des équipements TCAS, ou par une technique non coopérative grâce à des équipements de veille embarqués tels qu'un radar.

Le nouvel angle de cap $\overrightarrow{\Theta_{1b}}$ que doit prendre le premier aéronef pour amener la trajectoire du deuxième aéronef sur le côté $\overrightarrow{X_2 b}$ de l'angle sous lequel il voit le cercle de sécurité $C_1$ du premier aéronef, orienté au plus proche de son vecteur vitesse horizontale $\overrightarrow{V_2}$ est par définition l'angle orienté

$$\left( \overrightarrow{X_1 N}, \overrightarrow{V_1^b} \right)$$

que fait le nouveau vecteur vitesse horizontale $V_1^b$ acquis par le premier aéronef à la suite de sa manoeuvre d'évitement avec la direction du nord géographique $\overrightarrow{X_1 N}$:

$$\overrightarrow{\Theta_b} = \left(\overrightarrow{X_1 N}, \overrightarrow{V_1^b}\right)$$

Cet angle orienté peut être exprimé en fonction:

- du cap $\overrightarrow{\psi}$ de la droite orientée $\overrightarrow{X_1 X_2}$ reliant la position $X_1$ du premier aéronef à celle $X_2$ du deuxième aéronef:

$$\overrightarrow{\psi} = (\overrightarrow{X_1 N}, \overrightarrow{X_1 X_2})$$

- de l'angle orienté $\overrightarrow{\alpha_b}$ existant entre la droite orientée $\overrightarrow{X_2 X_1}$ reliant la position $X_2$ du deuxième aéronef à celle $X_1$ du premier aéronef et le vecteur vitesse horizontale $\overrightarrow{V_{rel}^b}$ du deuxième aéronef relativement au premier lorsque les risques de collision sont résolus et que sa trajectoire suit la droite orientée $\overrightarrow{X_2 b}$ confondue avec le côté de l'angle sous lequel le deuxième aéronef voit le cercle de protection $C_1$ du premier aéronef:

$$\overrightarrow{\alpha_b} = \left(\overrightarrow{X_2 X_1}, \overrightarrow{V_{rel}^b}\right) = \left(\overrightarrow{X_2 X_1}, \overrightarrow{X_2 b}\right)$$

et

- de l'angle orienté $\overrightarrow{\gamma_b}$ existant entre l'opposé $-\overrightarrow{V_{rel}^b}$ du vecteur vitesse horizontale du deuxième aéronef relativement au premier lorsque les risques de collision sont résolus et que sa trajectoire suit la droite orientée $\overrightarrow{X_2 b}$ confondue avec un côté de l'angle sous lequel le deuxième aéronef voit le cercle de protection $C_1$ du premier aéronef, et le vecteur vitesse horizontale $V_1^b$ acquis par le premier aéronef à la suite de sa manoeuvre d'évitement:

$$\overrightarrow{\gamma_b} = \left(-\overrightarrow{V_{rel}^b}, \overrightarrow{V_1^b}\right) = \left(\overrightarrow{b X_2}, \overrightarrow{g_b f}\right)$$

le point $g_b$ repérant l'extrémité du vecteur vitesse horizontale $\overrightarrow{V_{rel}^b}$ du deuxième aéronef par rapport au premier après résolution des risques de collision, lorsque ce vecteur est lié à la position $X_2$ du deuxième aéronef.

On a en effet, de par les propriétés des angles orientés, la relation:

$$\left(\overrightarrow{X_1 N}, \overrightarrow{V_1^b}\right) = \left(\overrightarrow{X_1 N}, \overrightarrow{X_1 X_2}\right) + \left(\overrightarrow{X_1 X_2}, \overrightarrow{X_2 X_1}\right) + \left(\overrightarrow{X_2 X_1}, \overrightarrow{X_2 b}\right) + \left(\overrightarrow{X_2 b}, \overrightarrow{b X_2}\right) + \left(\overrightarrow{b X_2}, \overrightarrow{V_1^b}\right) + 2k\pi$$

(k étant un entier).
Cette relation s'écrit également:

$$\overrightarrow{\Theta_b} = \overrightarrow{\psi} + \pi + \overrightarrow{\alpha_b} + \pi + \overrightarrow{\gamma_b} + 2k\pi \tag{2}$$

Les angles orientés figurant dans la partie droite de cette relation angulaire, sont tous déterminables à partir de la connaissance de la distance d'écartement minimum admise entre deux aéronefs et des positions et vecteurs vitesse horizontale des deux aéronefs.

Le cap $\overrightarrow{\psi_b}$ de la droite orientée $\overrightarrow{X_1 X_2}$ reliant la position $X_1$ du premier aéronef à celle $X_2$ du deuxième aéronef est lié à la pente de cette droite qui est connue du fait même que ces deux positions sont connues.

L'angle orienté $\overrightarrow{\alpha_b}$ existant entre la droite orientée $\overrightarrow{X_2 X_1}$ reliant la position $X_2$ du deuxième aéronef à celle $X_1$ du premier aéronef et le vecteur vitesse horizontale $\overrightarrow{V_{rel}^b}$ du deuxième aéronef relativement au premier lorsque les risques de collision sont résolus et que la trajectoire du deuxième aéronef suit la droite orientée $\overrightarrow{X_2 b}$ confondue avec un côté de l'angle sous lequel le deuxième aéronef voit le cercle de protection $C_1$ du premier aéronef correspond, au demi-angle sous lequel le deuxième aéronef voit le cercle de protection $C_1$ du premier aéronef. Eu égard à son sens d'orientation, il a pour valeur:

$$\overrightarrow{\alpha_b} = -\arcsin\left(\frac{S}{\left\|\overrightarrow{X_1 X_2}\right\|}\right) \qquad (3)$$

En tenant compte des propriétés du triangle $X_2$, $g_b$, f, l'angle orienté $\overrightarrow{\gamma_b}$ peut être exprimé en fonction de l'angle orienté $\overrightarrow{\varphi_b}$ existant entre le vecteur vitesse horizontale $\overrightarrow{V_2}$ du deuxième aéronef et la droite orientée $\overrightarrow{X_2 b}$ confondue avec un côté de l'angle sous lequel le deuxième aéronef voit le cercle de protection $C_1$ du premier aéronef par la relation:

$$\overrightarrow{\gamma_b} = \arcsin\left(\frac{\left\|\overrightarrow{V_2}\right\|}{\left\|\overrightarrow{V_1}\right\|} \sin\left(\overrightarrow{\varphi_b}\right)\right) \qquad (4)$$

Or l'angle orienté $\overrightarrow{\varphi_b}$ qui a pour définition:

$$\overrightarrow{\varphi_b} = (\overrightarrow{V_2}, \overrightarrow{X_2 b})$$

peut être exprimé en fonction:

- du cap $\overrightarrow{\theta_2}$ du deuxième aéronef:

$$\overrightarrow{\theta_2} = (\overrightarrow{X_2 N}, \overrightarrow{V_2})$$

- du cap $\overrightarrow{\psi}$ de la droite orientée $\overrightarrow{X_1 X_2}$ reliant la position $X_1$ du premier aéronef à celle $X_2$ du deuxième aéronef:

$$\overrightarrow{\psi} = (\overrightarrow{X_1 N}, \overrightarrow{X_1 X_2})$$

et
- de l'angle orienté $\overrightarrow{\alpha_b}$:

$$\overrightarrow{\alpha_b} = \left(\overrightarrow{X_2 X_1}, \overrightarrow{V_{rel}^b}\right) = \left(\overrightarrow{X_2 X_1}, \overrightarrow{X_2 b}\right)$$

En effet, en raison des propriétés des angles orientés, on a la relation:

$$(\overrightarrow{V_2}, \overrightarrow{X_2 b}) = (\overrightarrow{V_2}, \overrightarrow{X_2 N}) + (\overrightarrow{X_2 N}, \overrightarrow{X_1 X_2}) + (\overrightarrow{X_1 X_2}, \overrightarrow{X_2 X_1}) + (\overrightarrow{X_2 X_1}, \overrightarrow{X_2 b}) + 2k\pi$$

(k étant un entier).
Cette relation s'écrit également:

$$\overrightarrow{\varphi_b} = -\overrightarrow{\theta_2} + \overrightarrow{\psi} + \pi + \overrightarrow{\alpha_b} + 2k\pi \qquad (5)$$

Les angles figurant dans la partie droite de la relation précédente étant tous déterminables à partir de la connaissance des positions et vecteurs vitesse horizontale des deux aéronefs, et de la distance d'écartement minimum admise entre deux aéronefs, l'angle $\overrightarrow{\varphi_b}$ l'est également. Par conséquent, il suffit de remonter les relations précédentes pour parvenir à déterminer la valeur du nouveau cap $\overrightarrow{\Theta_{1b}}$ à faire adopter par le premier aéronef pour éliminer les risques de collision en amenant la trajectoire du deuxième aéronef sur le côté $\overrightarrow{X_2b}$ de l'angle sous lequel il voit le cercle de protection du premier aéronef, côté $\overrightarrow{X_2b}$ qui est le plus proche en orientation de son vecteur vitesse horizontale $\overrightarrow{V_2}$, à partir de la simple connaissance des positions et vecteurs vitesse horizontale des aéronefs et de la distance d'écartement minimum admise entre deux aéronefs.

On parvient, par un raisonnement analogue, à la détermination de la valeur du nouveau cap $\overrightarrow{\Theta_{1c}}$ à faire adopter par le premier aéronef pour éliminer les risques de collision en amenant la trajectoire du deuxième aéronef sur le côté $\overrightarrow{X_2c}$ de l'angle sous lequel il voit le cercle de protection du premier aéronef, côté $\overrightarrow{X_2c}$ qui est le plus éloigné en orientation de son vecteur vitesse horizontale $\overrightarrow{V_2}$, à partir de la simple connaissance des positions et vecteurs vitesse horizontale des aéronefs et de la distance d'écartement minimum admise entre deux aéronefs.

Plus précisément, la valeur du nouveau cap $\overrightarrow{\Theta_{1c}}$ qui est définie par l'angle orienté:

$$\overrightarrow{\Theta_c} = \left( \overrightarrow{X_1N}, \overrightarrow{V_1^c} \right)$$

peut être exprimée en fonction:

- du cap $\overrightarrow{\psi}$ de la droite orientée $\overrightarrow{X_1X_2}$ reliant la position $X_1$ du premier aéronef à celle $X_2$ du deuxième aéronef:

$$\overrightarrow{\psi} = (\overrightarrow{X_1N}, \overrightarrow{X_1X_2})$$

- de l'angle orienté $\overrightarrow{\alpha_c}$ existant entre la droite orientée $\overrightarrow{X_1X_2}$ reliant la position $X_1$ du premier aéronef à celle $X_2$ du deuxième aéronef et le vecteur vitesse horizontale $\overrightarrow{v_{rel}^c}$ du deuxième aéronef relativement au premier lorsque les risques de collision sont résolus et que sa trajectoire suit la droite orientée $\overrightarrow{X_2c}$ confondue avec le côté de l'angle sous lequel le deuxième aéronef voit le cercle de protection $C_1$ du premier aéronef:

$$\overrightarrow{\alpha_c} = \left( \overrightarrow{X_2X_1}, \overrightarrow{V_{rel}^c} \right) = \left( \overrightarrow{X_2X_1}, \overrightarrow{X_2c} \right)$$

et

- de l'angle orienté $\overrightarrow{\gamma_c}$ existant entre l'opposé $-\overrightarrow{v_{rel}^c}$ du vecteur vitesse horizontale du deuxième aéronef relativement au premier lorsque les risques de collision sont résolus et que sa trajectoire suit la droite orientée $\overrightarrow{X_2c}$ confondue avec un côté de l'angle sous lequel le deuxième aéronef voit le cercle de protection $C_1$ du premier aéronef, et le vecteur vitesse horizontale $V_1^c$ acquis par le premier aéronef à la suite de sa manoeuvre d'évitement:

$$\overrightarrow{\gamma_c} = \left( -\overrightarrow{V_{rel}^c}, \overrightarrow{V_1^c} \right) = \left( \overrightarrow{cX_2}, \overrightarrow{g_cf} \right)$$

le point $g_c$ repérant sur la figure 2 l'extrémité du vecteur vitesse horizontale $\overrightarrow{v_{rel}^c}$ du deuxième aéronef par rapport au premier après résolution des risques de collision, lorsque ce vecteur est lié à la position $X_2$ du deuxième aéronef.

On a en effet, en raison des propriétés des angles orientés, la relation:

$$\left( \overrightarrow{X_1N}, \overrightarrow{V_1^c} \right) = \left( \overrightarrow{X_1N}, \overrightarrow{X_1X_2} \right) + \left( \overrightarrow{X_1X_2}, \overrightarrow{X_2X_1} \right) + \left( \overrightarrow{X_2X_1}, \overrightarrow{X_2c} \right) + \left( \overrightarrow{X_2c}, \overrightarrow{cX_2} \right) + \left( \overrightarrow{cX_2}, \overrightarrow{V_1^c} \right) + 2k\pi$$

(k étant un entier).
Cette relation s'écrit également:

$$\overrightarrow{\Theta_{1c}}=\overrightarrow{\psi}+\pi+\overrightarrow{\alpha_c}+\pi+\overrightarrow{\gamma_c}+2k\pi \qquad\qquad (6)$$

Les angles figurant dans la partie droite de cette relation angulaire, sont tous déterminables à partir de la connaissance de la distance d'écartement minimum admise entre deux aéronefs et des positions et vecteurs vitesse horizontale des deux aéronefs.

Le cap $\overrightarrow{\psi}$ de la droite orientée $\overrightarrow{X_1X_2}$ reliant la position $X_1$ du premier aéronef à celle $X_2$ du deuxième est lié à la pente de cette droite qui est connue du fait même que ces deux positions sont connues.

L'angle orienté $\overrightarrow{\alpha_c}$ existant entre la droite orientée $\overrightarrow{X_2X_1}$ reliant la position $X_2$ du deuxième aéronef à celle $X_1$ du premier aéronef et le vecteur vitesse horizontale $\overrightarrow{r_{si}}$ du deuxième aéronef relativement au premier lorsque les risques de collision sont résolus et que sa trajectoire suit la droite orientée $\overrightarrow{X_2c}$ confondue avec un côté de l'angle sous lequel le deuxième aéronef voit le cercle de protection $C_1$ du premier aéronef correspond, au demi-angle sous lequel le deuxième aéronef voit le cercle de protection $C_1$ du premier aéronef. Eu égard à son sens d'orientation, il a pour valeur:

$$\overrightarrow{\alpha_c} = \arcsin\left(\frac{S}{\left\|\overrightarrow{X_1X_2}\right\|}\right) \qquad (7)$$

En tenant compte des propriétés du triangle $X_2$, $g_c$, f, l'angle orienté $\overrightarrow{\gamma_c}$ peut être exprimé en fonction de l'angle orienté $\overrightarrow{\varphi_c}$ existant entre le vecteur vitesse horizontale $\overrightarrow{V_2}$ du deuxième aéronef et la droite orientée $\overrightarrow{X_2c}$ confondue avec un côté de l'angle sous lequel le deuxième aéronef voit le cercle de protection $C_1$ du premier aéronef par la relation:

$$\overrightarrow{\gamma_c} = \arcsin\left(\frac{\left\|\overrightarrow{V_2}\right\|}{\left\|\overrightarrow{V_1}\right\|}\sin\left(\overrightarrow{\varphi_c}\right)\right) \qquad (8)$$

On remarque que la relation précédente n'a de sens que si l'arcsinus existe, c'est-à-dire si l'inégalité:

$$\left|\sin\overrightarrow{\varphi_c}\right|\frac{\left\|\overrightarrow{V_2}\right\|}{\left\|\overrightarrow{V_1}\right\|}<1$$

est vérifiée. C'est l'inégalité qui conditionne, comme on l'a vu précédemment (relation 1), l'existence du cap d'esquive $\overrightarrow{\Theta_{1c}}$. Ainsi, on peut ne pas vérifier l'existence du cap d'esquive $\overrightarrow{\Theta_{1c}}$ avant sa détermination puisque sa non existence conduit naturellement à une impossibilité de détermination de l'angle orienté $\overrightarrow{\gamma_c}$ qui constitue une étape indispensable du processus de détermination.

L'angle orienté $\overrightarrow{\varphi_c}$ qui a pour définition:

$$\overrightarrow{\varphi_c} = (\overrightarrow{V_2},\overrightarrow{X_2c})$$

peut être exprimé en fonction:

- du cap $\overrightarrow{\theta_2}$ du deuxième aéronef:

$$\overrightarrow{\theta_2} = (\overrightarrow{X_2N},\overrightarrow{V_2})$$

- du cap $\overrightarrow{\psi}$ de la droite orientée $\overrightarrow{X_1X_2}$ reliant la position $X_1$ du premier aéronef à celle $X_2$ du deuxième aéronef:

$$\vec{\psi} = (\overrightarrow{X_1N}, \overrightarrow{X_1X_2})$$

et
- de l'angle orienté $\vec{\alpha_c}$:

$$\overrightarrow{\alpha_c} = \left( \overrightarrow{X_2X_1}, \overrightarrow{V_{rel}^c} \right) = \left( \overrightarrow{X_2X_1}, \overrightarrow{X_2c} \right)$$

En effet, en raison des propriétés des angles orientés, on a la relation:

$$(\overrightarrow{V_2}, \overrightarrow{X_2c}) = (\overrightarrow{V_2}, \overrightarrow{X_2N}) + (\overrightarrow{X_2N}, \overrightarrow{X_1X_2}) + (\overrightarrow{X_1X_2}, \overrightarrow{X_2X_1}) + (\overrightarrow{X_2X_1}, \overrightarrow{X_2c}) + 2k\pi$$

(k étant un entier).
Cette relation s'écrit également:

$$\vec{\varphi_c} = -\vec{\theta_2} + \vec{\psi} + \pi + \vec{\alpha_c} + 2k\pi \tag{9}$$

Les angles orientés figurant dans la partie droite de la relation précédente étant tous déterminables à partir de la connaissance des positions et des vecteurs vitesse horizontale des deux aéronefs, et de la distance d'écartement minimum admise entre deux aéronefs, l'angle orienté $\vec{\varphi_c}$ l'est également. Par conséquent, il suffit de remonter les relations précédentes pour parvenir à déterminer la valeur du nouveau cap $\overrightarrow{\Theta_{1c}}$ à faire adopter par le premier aéronef pour éliminer les risques de collision en amenant la trajectoire du deuxième aéronef sur le côté $\overrightarrow{X_2c}$ de l'angle sous lequel il voit le cercle de protection du premier aéronef, côté $\overrightarrow{X_2c}$ qui est le plus éloigné en orientation de son vecteur vitesse horizontale $\overrightarrow{V_2}$, à partir de la simple connaissance des positions et vecteurs vitesse horizontale des aéronefs et de la distance d'écartement minimum admise entre deux aéronefs.

Une fois que le premier aéronef a adopté l'une des deux nouvelles valeurs de cap $\overrightarrow{\Theta_{1b}}$ ou $\overrightarrow{\Theta_{1c}}$ ainsi déterminées, il est assuré de voir passer le deuxième aéronef à une distance minimale au moins égale à celle S convenue mais il s'éloigne de sa route initiale qu'il va devoir rejoindre au plus tôt sans recréer de risques de collision avec le deuxième aéronef.

La figure 3 est un schéma illustrant un exemple de trajectoire complète d'évitement permettant, à un aéronef 10 parcourant un segment rectiligne 11 d'une route initialement prévue, d'une part, la résolution d'un risque de collision avec un autre aéronef et, d'autre part, la rejointe de ce segment rectiligne 11 de la route initialement prévue au prix d'un minimum de détour. Cette trajectoire d'évitement se compose de deux segments rectilignes successifs: un premier segment rectiligne d'esquive 12 et un deuxième segment rectiligne de rejointe 13.

Le premier segment rectiligne d'esquive 12 se détache du segment droit 11 de la route initialement prévue en un point $P_{SOM}$ correspondant à la position de l'aéronef au début de la manoeuvre d'évitement alors qu'un conflit de route avec un deuxième aéronef engendrant un risque de collision à moyen terme a été détecté, une ou deux nouvelles valeurs de cap $\overrightarrow{\Theta_{1b}}$, $\overrightarrow{\Theta_{1c}}$ calculées pour la résolution du risque de collision et l'une d'entre elles choisie. Son cap s'écarte de celui $\vec{\theta_1}$ du segment rectiligne 11 de la route initialement prévue, d'un angle orienté $\vec{\beta}$ correspondant à la différence entre la nouvelle valeur de cap $\overrightarrow{\Theta_{1b}}$ ou $\overrightarrow{\Theta_{1c}}$ adoptée pour la résolution du risque de collision et la valeur $\vec{\theta_1}$ du cap du segment droit 11 de la route initialement prévue:

$$\vec{\beta} = \vec{\Theta} - \vec{\theta}$$

Le deuxième segment rectiligne de rejointe 13 se détache du premier segment rectiligne d'esquive 12 en un point tournant $P_T$ et rejoint le segment droit 11 de la route initialement prévue en un point de ralliement $P_{EOM}$. Son orientation est choisie de manière à présenter une différence de cap égale à $-\vec{\beta}$ avec le cap du segment droit 11 de la route initialement prévue.

Ainsi déterminée, la trajectoire d'évitement suit les côtés d'un triangle isocèle dont la base repose sur le segment droit 11 de la route initialement prévue. Elle n'est entièrement déterminée que lorsque la position du point tournant $P_T$ a été choisie.

Le choix de la position du point tournant $P_T$ répond à l'objectif de limiter le plus possible la longueur de la trajectoire d'évitement sans pour autant faire resurgir les risques de collision à l'origine de cette trajectoire d'évitement.

Comme le nouveau cap adopté pour le segment rectiligne d'esquive 12 a été déterminé pour amener la trajectoire de l'aéronef menaçant sur un côté de l'angle sous lequel cet aéronef menaçant voit le cercle de protection de l'aéronef manoeuvrant 10, la distance entre les deux aéronefs va décroître pendant le cheminement de l'aéronef 10 sur le segment rectiligne d'esquive 12, jusqu'à ce qu'il atteigne un point $C_{PA1}$ où sa distance avec l'aéronef menaçant passe par un minimum correspondant à la distance d'écartement minimum S admise admis entre deux aéronefs. La position de ce point $C_{PA1}$ est facilement déterminée car l'aéronef manoeuvrant 10, met, pour y parvenir depuis le point $P_{SOM}$, un temps $t_{CPA1}$ correspondant, comme le montre le graphe de la figure 1, à celui nécessaire pour parcourir la distance $X_2X_1$ avec une vitesse égale à la projection sur la droite $X_2X_1$ du vecteur vitesse horizontale $\overrightarrow{V_{rel}}$ du deuxième aéronef relativement au premier:

$$t_{CPA} = \frac{\left\|\overrightarrow{X_1 X_2}\right\|^2}{\overrightarrow{X_1 X_2} \times \left(\overrightarrow{V_2} - \overrightarrow{V_1}\right)} = -\left(\frac{\overrightarrow{X_1 X_2} \times \left(\overrightarrow{V_2} - \overrightarrow{V_1}\right)}{\left\|\overrightarrow{V_2} - \overrightarrow{V_1}\right\|^2}\right)$$

$$P_{CPA} = P_{SOM} + t_{CPA} \cdot \overrightarrow{V_1}$$

La position du point tournant $P_T$ sur le premier segment rectiligne d'esquive (12 figure 3) doit être prise au-delà du point $P_{CPA}$ d'écartement minimum, de manière à ne pas recréer sur le deuxième segment rectiligne de rejointe (13 figure 3) de nouveaux risques de collision avec le même aéronef, cela d'autant plus que l'on se retrouverait en risque de collision immédiate puisque la distance d'écartement des deux aéronefs est déjà proche du minimum admis. Sa détermination se fait de manière que le deuxième aéronef ne pénètre pas, mais tangente, le cercle de sécurité $C_1$ du premier aéronef, lorsque le premier aéronef parcourt le deuxième segment rectiligne de rejointe (13 figure 3) de sa trajectoire d'évitement.

Pour cette détermination, on se place, comme le montre le graphe de la figure 4, dans un plan horizontal lié au premier aéronef et déjà adopté pour les figures 1 et 2. Dans cette représentation, le premier aéronef a une position fixe $X_1$ et le deuxième aéronef une position mobile. Lorsque le premier aéronef entame une trajectoire d'évitement (position $P_{SOM}$ sur la figure 3), le deuxième aéronef est à la position $X_{2SOM}$ et possède un vecteur vitesse horizontale $\overrightarrow{V_{RSOM}}$ relativement au premier aéronef. Lorsque le premier aéronef parcourt le premier segment rectiligne d'esquive (12 figure 3) de sa trajectoire d'évitement, le deuxième aéronef parcourt, à vitesse relative constante $V_{RSOM}$, la droite orientée $\overrightarrow{X_{RSOM}n}$ tangente au cercle de protection $C_1$ du premier aéronef puisque le premier aéronef a effectué, au point de départ ($P_{SOM}$ figure 3) de sa trajectoire d'évitement, le changement de cap nécessaire pour cela. Le deuxième aéronef parcourt, la droite orientée $\overrightarrow{X_{RSOM}n}$ jusqu'au point tournant fictif $P_T'$ qui correspond à l'instant où le premier aéronef procède à un nouveau changement de cap pour emprunter le deuxième segment rectiligne de rejointe (13 figure 3) de sa trajectoire d'évitement. Au-delà du point tournant fictif $P_T'$, le deuxième aéronef a un nouveau vecteur vitesse horizontale relative $\overrightarrow{V_{REOM}}$ et se met à parcourir, à vitesse relative constante $\overrightarrow{V_{REOM}}$, une nouvelle droite orientée $\overrightarrow{P'_T m}$.

Le point $P_T$ est choisi au-delà du point $C_{PA1}$ où le deuxième aéronef passe à la distance minimum admise S du premier aéronef, de manière que le deuxième segment rectiligne de rejointe (13 figure 3) dont le cap est fixé arbitrairement à la valeur $\vec{\Theta}$-2$\vec{\beta}$ respecte la distance de séparation minimale S admise avec le deuxième aéronef. Sa position est accessible indirectement par l'intermédiaire de celle du point tournant fictif $P_T'$ qui est atteint au même moment par le deuxième aéronef. En effet, ce point tournant fictif $P_T'$ est à une distance relative $D_{relPT}$ connue du point $C'_{PA1}$ de la trajectoire du deuxième aéronef vue du premier aéronef correspondant à la distance d'écartement minimum admise entre les deux aéronefs, parcourue à une vitesse également connue par le deuxième aéronef.

La distance relative $D_{relPT}$ est connue car elle peut être déduite d'une relation trigonométrique ne mettant en oeuvre que des grandeurs déductibles de la connaissance des positions et vecteurs vitesse horizontale des deux aéronefs, et de la connaissance de la valeur S de la distance d'écartement minimale admise entre deux aéronefs. En effet, la distance relative $D_{relPT}$ peut être exprimée par la relation:

$$D_{relPT} = \left\|\overrightarrow{X_1 C'_{PA1}}\right\| \times \tan\left(\overrightarrow{C'_{PA1} X_1}, \overrightarrow{P_T X_1}\right) = S \times \tan\left(\overrightarrow{C'_{PA1} X_1}, \overrightarrow{P_T X_1}\right)$$

En tenant compte des propriétés des angles inscrits et exinscrits, cette relation peut se mettre sous la forme:

$$D_{relPT} = S \times \tan\left(\frac{\vec{\delta}}{2}\right)$$

avec:

$$\vec{\delta} = \left(\overrightarrow{X_{2SOM}n}, \overrightarrow{P'_T m}\right)$$

L'angle orienté $\vec{\delta}$ entre, d'une part, la route $\overrightarrow{X_{2SOM}n}$ suivie par le deuxième aéronef relativement au premier aéronef alors que le premier aéronef parcourt le premier segment rectiligne d'esquive (12 figure 3) de sa trajectoire d'évitement et, d'autre part, la route $\overrightarrow{P'_T m}$ suivie par le deuxième aéronef relativement au premier aéronef alors que le premier aéronef parcourt le deuxième segment de rejointe (13 figure 3) peut s'exprimer en fonction du cap $\overrightarrow{\chi_{EOM}}$ de la route $\overrightarrow{P'_T m}$. En effet, on a la relation entre angles orientés:

$$(\overrightarrow{P_T N_3}, \overrightarrow{P_T m}) = (\overrightarrow{P_T N_3}, \overrightarrow{X_1 N_2}) + (\overrightarrow{X_1 N_2}, \overrightarrow{X_1 X_{2SOM}}) + (\overrightarrow{X_1 X_{2SOM}}, \overrightarrow{X_{2SOM} X_1})$$

$$+ (\overrightarrow{X_{2SOM} X_1}, \overrightarrow{X_{2SOM} n}) + (\overrightarrow{X_{2SOM} n}, \overrightarrow{P_T m}) + 2k\pi$$

ce qui s'écrit encore:

$\overrightarrow{\chi_{EOM}} = 0 + \overrightarrow{\psi_{SOM}} + \pi + \overrightarrow{\alpha_{SOM}} + \vec{\delta} + 2k\pi$ $\overrightarrow{\psi_{SOM}}$ étant le cap du segment orienté $\overrightarrow{X_1 X_{2SOM}}$ et $\overrightarrow{\alpha_{SOM}}$ étant l'angle orienté

$(\overrightarrow{X_{2SOM} X_1}, \overrightarrow{X_{2SOM} n})$, de sorte que l'on a:

$$\vec{\delta} = \overrightarrow{\chi_{EOM}} - (\overrightarrow{\psi_{SOM}} + \pi + \overrightarrow{\alpha_{SOM}})$$

La distance relative $D_{relPT}$ séparant le point tournant $P_T'$ du point $C_{PA1}$ dans un plan horizontal lié au premier aéronef s'exprime donc par la relation:

$$D_{relPT} = S \times \tan\left(\frac{\overrightarrow{\chi_{EOM}} - \left(\overrightarrow{\psi_{SOM}} + \pi + \overrightarrow{\alpha_{SOM}}\right)}{2}\right)$$

qui permet de le déterminer à partir de la seule connaissance des positions et vecteurs vitesse horizontale des deux aéronefs, et de la distance d'écartement minimale admise entre deux aéronefs.

Le temps $t_{PT}$ mis par le deuxième aéronef pour parcourir la distance relative $D_{relPT}$ à la vitesse $V_{RSOM}$ est à son tour déductible de la seule connaissance des positions et vecteurs vitesse horizontale des deux aéronefs, et de la distance d'écartement minimale admise entre deux aéronefs puisqu'il vaut:

$$t_{PT} = \frac{D_{relPT}}{\|\overrightarrow{V_{RSOM}}\|}$$

avec:

$\overrightarrow{V_{RSOM}} = \overrightarrow{V_2} - \overrightarrow{V_{1SOM}}$ $\overrightarrow{V_{1SOM}}$ étant le vecteur vitesse horizontale du premier aéronef sur le premier segment rectiligne (12 figure 3) de sa trajectoire d'esquive. Il permet d'estimer la position du point tournant $P_T$ au-delà du point $C_{PA1}$ du premier segment rectiligne d'esquive (12 figure 3) puisque celui-ci est atteint par le premier aéronef animé d'une vitesse $V_{1SOM}$ un temps $t_{PT}$ après le point $C_{PA1}$:

$$D_{PT} = \|P_T - C_{PA1}\| = t_{PT} \times \|\overrightarrow{V_{1SOM}}\|$$

D'où, en final, l'expression permettant de calculer la longueur du premier segment rectiligne d'évasive (12 figure 3) de la trajectoire d'évitement du premier aéronef et donc la position du point tournant $P_T$:

$$\overrightarrow{X_{PT}} = -\left( \frac{\left( \overrightarrow{X_{1SOM}X_{2SOM}} \right) \times \left( \overrightarrow{V_2} - \overrightarrow{V_{1SOM}} \right)}{\|\overrightarrow{V_2} - \overrightarrow{V_{1SOM}}\|^2} \right) \times \|\overrightarrow{V_{1SOM}}\| \qquad (10)$$
$$+ S \times \tan\left( \frac{\overrightarrow{\chi_{EOM}} - \left( \overrightarrow{\psi_{SOM}} + \pi + \overrightarrow{\alpha_{SOM}} \right)}{2} \right) \frac{\|\overrightarrow{V_{1SOM}}\|}{\|\overrightarrow{V_2} - \overrightarrow{V_{1SOM}}\|^2}$$

Dans le cas le plus général, de résolution de risque de collision à moyen terme, on peut déterminer deux nouvelles valeurs $\overrightarrow{\Theta_{1b}}$ et $\overrightarrow{\Theta_{1c}}$ de cap permettant au premier aéronef d'esquiver le risque de collision en se déroutant soit d'un côté, soit de l'autre de sa route initialement prévue. Il faut alors choisir entre ces deux possibilités de déroutement qui conduisent à deux trajets d'évitement différents. Le choix s'effectue en recherchant la nouvelle valeur de cap qui conduit au déroutement le plus court.

La figure 5 illustre la façon de procéder à un tel choix lorsque les trajets d'évitement présentent une partie de rejointe constituée d'un segment rectiligne de même longueur que le segment rectiligne constituant leur première partie d'esquive. En effet, bien qu'il soit possible de donner d'autres formes à la deuxième partie de rejointe d'une trajectoire d'évitement, on préfère lui donner cette forme déjà envisagée relativement à la figure 3, car elle convient bien à la résolution d'un risque de collision à moyen terme rencontré alors que le premier aéronef parcourt une section rectiligne de sa route initialement prévue qui est le cas le plus fréquemment rencontré en technique de vol Free Flight. Dans ces conditions, une trajectoire d'évitement suit les côtés (12, 13 figure 3) d'un triangle isocèle dont la base s'appuie sur le segment rectiligne (12 figure 3) de la route initialement prévue.

On distingue sur la figure 5 la section rectiligne 11 de la route initialement prévue que le premier aéronef 10 est en train de parcourir alors que se présente un risque de collision à moyen terme pour la résolution duquel il prévoit de se dérouter au point $P_{SOM}$ de sa route initiale, soit à bâbord, pour suivre une trajectoire d'évitement passant par un point tournant $P_{T1}$ et rejoignant la route initiale en un point de fin de déroutement $P_{EOM1}$, soit à tribord pour suivre une trajectoire d'évitement passant par un autre point tournant $P_{T2}$ et rejoignant la route initiale en un autre point de fin de déroutement $P_{EOM2}$.

Les deux trajectoires d'évitement bâbord et tribord sont parfaitement définies par leurs formes suivant les côtés d'un triangle isocèle, par les caps de leur première partie d'esquive déterminés au moyen des relations (2 à 5) et (6 à 9) et par les longueurs des deux segments qui les constituent, longueurs qui sont égales aux distances séparant leurs points tournants $P_{T1}$, respectivement $P_{T2}$ du point $P_{SOM}$ de début de manoeuvre de déroutement déterminées au moyen de la relation (10). Le choix entre les deux se fait de manière à réduire le plus possible le rallongement de la route initialement prévue. Pour être à même de le faire, il suffit de calculer les longueurs des deux trajets allant du point $P_{SOM}$ de début de manoeuvre au point de ralliement $P_{EOM1}$ ou $P_{EOM2}$ le plus éloigné sur la route initiale, l'un empruntant la trajectoire d'évitement bâbord et l'autre empruntant la trajectoire d'évitement tribord, et d'adopter la trajectoire d'évitement donnant le trajet le plus court.

Sur la figure 5, le critère d'un rallongement minimum de la route initialement prévue conduit à préférer la trajectoire d'évitement bâbord $P_{SOM}$, $P_{T1}$, $P_{EOM1}$ à la trajectoire d'évitement tribord $P_{SOM}$, $P_{T2}$, $P_{EOM2}$ mais ce critère n'est pas absolu car il peut se présenter des cas où la trajectoire d'évitement conduisant au rallongement minimum de la route initialement prévue n'est pas praticable parce qu'elle entraîne des risques de collisions avec un troisième aéronef ou parce qu'elle passe par une zone que l'on désire éviter, par exemple une zone orageuse.

Les graphes des figures 6a et 6b tracés dans un plan horizontal par rapport à un référentiel absolu, montrent un cas pratique de résolution de conflit de trafic. Deux aéronefs $A_1$ et $A_i$ suivent des routes initiales 11, respectivement 15 concourantes, l'un $A_1$ avec un vecteur vitesse horizontale $\vec{V_1}$, l'autre $A_i$ avec un vecteur vitesse horizontale $\vec{V_i}$. Alors que l'aéronef $A_1$ se trouve sur sa route initiale 11, à la position $X_1$ et l'aéronef $A_i$ sur sa route initiale 15, à la position $X_i$, l'aéronef $A_1$ est averti d'un conflit de trafic avec l'aéronef $A_i$ et du fait qu'il n'est pas prioritaire et qu'il doit résoudre ce conflit. En effet, si aucun des deux aéronefs ne modifie sa route et son vecteur vitesse, ils vont se retrouver, sur les parties de leurs routes 11 et 15 matérialisées par des croix, avec une distance de séparation inférieure à celle S admise repérée sur la figure 6a par des cercles $C_1$, $C_1'$. Par exemple, lorsque l'aéronef se retrouvera au point $P_{C1}$, sur la partie en pointillés de sa route 11, l'aéronef $A_i$ se trouvera au point $P_{Tb}'$ de sa route 15, à l'intérieur de son cercle de protection $C_1'$ représenté en trait interrompu. On suppose que l'aéronef $A_1$ a, à sa disposition, pour résoudre ce conflit de route, deux trajectoires d'évitement possibles, l'une par tribord et l'autre par bâbord, c'est-à-dire que l'on est dans un cas de conflit de route vérifiant l'inégalité (1).

La figure 6a illustre la trajectoire d'évitement bâbord qui permet de faire passer l'aéronef $A_1$ derrière l'aéronef $A_i$ en incurvant la route de l'aéronef $A_1$ en direction de la position initiale $X_i$ de l'aéronef $A_i$. Cette trajectoire d'évitement bâbord est constituée d'une première partie rectiligne d'esquive joignant le point de début de manoeuvre $P_{SOM1}$ à un point tournant $P_{Tb}$ placé à bâbord de la route initiale et d'une deuxième partie rectiligne de rejointe de la route initiale 11 joignant le point tournant $P_{Tb}$ à un point $P_{EOM1}$ de la route initiale 11. Sur la première partie d'esquive, la distance entre les deux aéronefs $A_1$ et $A_i$ diminue jusqu'à atteindre, au voisinage du point tournant $P_{Tb}$ (pour être précis le point $C_{PA1}$ montré à la figure 3), un minimum restant au-dessus de la distance d'écartement minimum admise S. Sur la deuxième partie de rejointe de la route initiale, la distance entre les deux aéronefs $A_1$ et $A_i$ se remet assez rapidement à croître (pour être précis depuis un point $C_{PA2}$ voisin du point tournant $P_{Tb}$ montré à la figure 3) écartant tout risque d'une résurgence du conflit de route. Le cercle de protection $C_1$ tracé en trait continu alors que les aéronefs $A_1$ et $A_i$ sont au plus proche, l'aéronef $A_1$ à proximité du point tournant $P_{Tb}$ et l'aéronef $A_i$ à proximité du point $P_{Tb}'$ montre que la distance minimum entre les deux aéronefs reste toujours supérieure à la distance d'écartement minimum admise.

La figure 6b illustre la trajectoire d'évitement tribord qui permet de faire passer l'aéronef $A_1$ devant l'aéronef $A_i$ en incurvant la route de l'aéronef $A_1$ dans une direction opposée à celle de la position initiale $X_i$ de l'aéronef $A_i$. Cette trajectoire d'évitement tribord est constituée d'une première partie rectiligne d'esquive joignant le point de début de manoeuvre $P_{SOM1}$ à un point tournant $P_{Tt}$ placé à tribord de la route initiale et d'une deuxième partie rectiligne de rejointe de la route initiale 11 joignant le point tournant $P_{Tt}$ à un point $P_{EOM1}$ de la route initiale 11. Cette trajectoire d'évitement tribord permet aussi de maintenir la distance entre les deux aéronefs supérieure à la distance d'écartement minimum admise. Elle paraît plus sûre en apparence que la trajectoire d'évitement bâbord puisqu'elle ralentit davantage, dès le départ, le rythme de diminution de l'écart entre les deux aéronefs. Elle est en fait beaucoup plus hasardeuse car elle implique une course poursuite avec l'autre aéronef dans le but de le dépasser, course poursuite qui ne peut être gagnée que si le test basé sur l'inégalité (1) est positif et qui conduit le plus souvent à un important détour. Elle sera souvent éliminée, lors du choix basé sur le minimum de détour mais elle peut quand même être retenue lorsque l'autre trajectoire d'évitement, bien que plus courte pose des problèmes, comme le passage par des zones non souhaitées ou la création de conflit de trafic avec d'autres aéronefs également dans le voisinage. De toutes façons, il arrive qu'elle soit la plus courte, par exemple, lorsque la géométrie du conflit initial est très désaxée sur bâbord avec des trajectoires convergeant plus lentement.

La figure 7 est un organigramme résumant les principales étapes du procédé qui vient d'être décrit lors de sa mise en oeuvre, à bord d'un aéronef $A_1$, pour la résolution des conflits de trafic ou risques de collision à moyen terme avec d'autres aéronefs $A_2,...,A_i,...,A_n$ évoluant dans le voisinage.

La première étape 20 consiste dans une prise en compte périodique, du niveau de vol, de la position $X_1$ et du vecteur vitesse horizontale $\vec{V_1}$ de l'aéronef $A_1$ considéré, qui sont délivrés par les équipements de navigation de bord de cet aéronef $A_1$, et des niveaux de vol, des positions $X_2,...,X_i...,X_n$ et des vecteurs vitesse horizontale $\vec{V_2},...,\vec{V_i},...,\vec{V_n}$ des autres aéronefs $A_2,...,A_i...,A_n$ évoluant dans le voisinage de cet aéronef $A_1$, qui peuvent être fournis par tous moyens mais surtout par un équipement genre TCAS à sensibilité accrue monté à bord de l'aéronef $A_1$.

La deuxième étape 21 consiste en la détection des conflits de trafic, c'est-à-dire des aéronefs $A_2,...,A_i...,A_n$ situés au même niveau de vol que l'aéronef $A_1$ considéré, qui, en raison de leurs vecteurs vitesse horizontale relatifs par rapport à l'aéronef $A_1$ considéré sont susceptibles de s'en approcher à des distances inférieures au minimum admis pour assurer la sécurité du trafic. Comme indiqué précédemment, cette détection de conflit de trafic s'effectue en examinant si les droites orientées supportant les vecteurs vitesse horizontale des aéronefs $A_2,...,A_i...,A_n$ qui évoluent au même niveau de vol que l'aéronef $A_1$ considéré, mesurés relativement à cet aéronef interceptent un cercle de protection ayant pour centre cet aéronef $A_1$ et pour rayon la distance de séparation minimale admise.

La troisième étape 22 consiste, dès détection d'un conflit entre l'aéronef considéré $A_1$ et un autre aéronef $A_i$ évoluant dans son voisinage, au même niveau de vol que lui, à déterminer, par application des règles de navigation en vigueur, à quel aéronef incombe la manoeuvre d'évitement pour la résolution de ce conflit.

La quatrième étape 23 consiste, dès que l'aéronef $A_1$ considéré se voit attribuer la réalisation d'une manoeuvre d'évitement pour la résolution d'un conflit de trafic avec un autre aéronef $A_i$, à déterminer s'il y a un ou deux caps possibles d'esquive par application de l'inéquation (1), puis à déterminer les valeurs du ou des deux caps effectivement possibles pour une esquive à l'aide des relations (2 à 9).

La cinquième étape 24 consiste à déterminer, pour chaque cap effectivement possible pour une esquive obtenu au cours de l'étape précédente, une trajectoire d'évitement permettant à la fois la résolution du conflit en cours de traitement et la rejointe de la route initialement prévue, cette trajectoire d'évitement étant construite en deux parties : une première partie d'esquive constituée d'un segment rectiligne ayant le cap possible pour une esquive considéré et allant d'un point $P_{SOM}$ de la route initiale adopté pour le début de la manoeuvre d'évitement à un point tournant $P_T$ déterminé à l'aide de la relation (10), et une deuxième partie de rejointe allant de ce point tournant $P_T$ à un point $P_{EOM}$ de rejointe de la route initiale situé en aval du point $P_{SOM}$ du début de la manoeuvre d'évitement.

La sixième étape 25 consiste, lorsque deux trajectoires d'évitement ont été déterminées au cours de l'étape précédente pour la résolution d'un même conflit, à choisir celle qui correspond au détour le plus court à partir de la comparaison des longueurs des deux chemins menant du point $P_{SOM}$ de la route initiale adopté pour le début de la manoeuvre d'évitement au point de rejointe $P_{EOM}$ de la route initiale le plus éloigné et passant chacun par l'une des trajectoires d'évitement tout en respectant certaines contraintes géographiques et de trafic.

La septième étape 26 consiste en la présentation au pilote, en même temps qu'une alarme d'existence de conflit de trafic ou peu de temps après, d'une proposition de trajectoire d'évitement préférée.

La huitième étape 27 consiste dans l'attente d'une validation par le pilote de la trajectoire d'évitement proposée à l'étape précédente avec une mise à jour périodique à la fois du point $P_{SOM}$ de début de manoeuvre qui est déplacé pour rester au devant de l'aéronef, sur sa route initiale et de la trajectoire d'évitement proposée afin qu'elle corresponde toujours à la situation actuelle.

La huitième étape 28 consiste, après la validation par le pilote de la trajectoire d'évitement proposée, dans l'adoption de cette dernière pour un suivi par un pilote automatique sous contrôle d'un calculateur de gestion de vol.

En variante, on ne détermine pas au cours de la quatrième étape 23 s'il y a un ou deux caps d'esquive possibles mais on procède à la détermination systématique de deux caps d'esquive en prenant le risque de voir l'une des deux détermination avorter.

Le calculateur de gestion de vol embarqué à bord d'un aéronef dont la fonction essentielle est de fournir au pilote automatique, les consignes de vitesse, de cap et d'altitude permettant à l'aéronef de suivre une route initialement prévue prend avantageusement en charge l'exécution, en tâche de fond, du procédé qui vient d'être décrit pour la résolution des conflits de trafic entre aéronefs. Dès qu'une trajectoire d'évitement est validée par le pilote, il l'incorpore à la route à suivre en modifiant en conséquence les consignes qu'il donne au pilote automatique, ce qui évite la nécessité d'un pilotage manuel de l'aéronef pour la résolution d'un conflit de trafic.

En conclusion, la manoeuvre d'évitement décrite ci-dessus:

- respecte au mieux les distances autorisées de séparation entre aéronefs pour le plus grand bénéfice de la sécurité du trafic aérien.
- minimise la valeur des changements de cap pour le plus grand confort des passagers.
- minimise le nombre des changements de cap pour le plus grand confort des opérationnels (pilotes et contrôleurs en charge du monitoring).
- minimise l'allongement de la trajectoire donc la perte de temps et la surconsommation de fuel.
- minimise l'écart de route par rapport à la route initiale pour le plus grand bénéfice de la stabilité du trafic (minimisation du risque de l'effet domino) et de la sécurité par rapport à des phénomènes météorologiques ou à la géographie.
- est facilement automatisable car elle se présente comme l'insertion de trois points tournants supplémentaires dans le plan de vol initial du système de gestion du vol.

De plus, la détermination de la trajectoire d'évitement proposée au pilote effectuée de manière explicite, en ne faisant appel à aucun processus itératif, prend un temps d'exécution relativement constant de sorte qu'un temps maximum d'exécution peut être facilement garanti. Cette propriété est un élément décisif dans le cadre de l'acceptabilité opérationnelle d'un système embarqué de séparation car le système en charge de la résolution peut être dimensionné pour garantir un ratio donné entre le temps de latence existant depuis la détection d'un conflit jusqu'au moment où le conflit devient critique, et le temps nécessaire à la résolution du conflit.

**Revendications**

**1.** Procédé d'élaboration d'une trajectoire d'évitement, dans un plan horizontal, pour un premier aéronef suivant une première route dite route initiale, en vue de la résolution d'un conflit de trafic avec deuxième aéronef suivant une deuxième route pouvant être identique à la première, à partir de la connaissance d'une distance minimale de sécurité S à respecter entre deux aéronefs, et des positions $X_1$ et $X_2$ et des vecteurs vitesse horizontale $\vec{V_1}$ et $\vec{V_2}$ des deux aéronefs, ledit procédé comportant les étapes suivantes:

- détermination du vecteur $\vec{V_{rel}}$ de la vitesse horizontale du deuxième aéronef relativement au premier,
- détermination, dans le plan horizontal, d'un cercle de protection $C_1$ autour du premier aéronef avec pour rayon la distance minimale de sécurité S,
- test d'intersection de la droite support du vecteur $\vec{V_{rel}}$ de la vitesse horizontale du deuxième aéronef par rapport au premier, avec le cercle de protection $C_1$ du premier aéronef,

**caractérisé en ce qu'**il comporte en outre, en cas d'intersection du cercle de protection du premier aéronef par le vecteur $\vec{V_{rel}}$ de la vitesse horizontale du deuxième aéronef relativement au premier impliquant un risque de collision, c'est-à-dire une tendance pour la distance de séparation entre les deux aéronefs à se réduire jusqu'à passer en dessous de la distance minimale de sécurité S, les étapes suivantes:

- détermination de l'angle $\vec{\alpha_b}$ - $\vec{\alpha_c}$ sous lequel le deuxième aéronef voit le cercle de protection $C_1$ du premier aéronef,
- détermination d'un point $P_{SOM}$ de début de manoeuvre d'évitement situé sur la route initiale du premier aéronef et décalé en aval de la position actuelle $X_1$ du premier aéronef,
- détermination d'au moins une nouvelle valeur d'angle de cap $\vec{\Theta_{1b}}$ et/ou $\vec{\Theta_{1c}}$ à suivre par le premier aéronef, sans changer de module de vitesse horizontale, pour amener le vecteur $\vec{V_{rel}}$ de la vitesse horizontale du deuxième aéronef relativement au premier en limite, sur l'un des côtés $\vec{X_2 b}$, $\vec{X_2 c}$ de l'angle sous lequel le deuxième aéronef voit le cercle de protection Ci du premier,
- détermination d'au moins une trajectoire d'évitement de risque de collision pour le premier aéronef comportant une première partie d'esquive constituée d'un segment rectiligne ayant pour origine le point $P_{SOM}$ de début de manoeuvre d'évitement, pour cap l'une des nouvelles valeurs d'angle de cap $\vec{\Theta_{1b}}$ ou $\vec{\Theta_{1c}}$ obtenues à l'étape précédente et pour fin un point tournant $P_T$ choisi au-delà d'un point $C_{PA1}$ où la distance de séparation entre les deux aéronefs passe par un minimum égal à la distance minimale de sécurité S, et, au-delà du point tournant $P_T$, un deuxième partie de rejointe de la route initiale.

2. Procédé selon la revendication 1, **caractérisé en ce que** l'étape de détermination d'au moins une nouvelle valeur d'angle de cap comporte:

- un test comparatif portant sur l'angle orienté $\vec{\varphi_c}$ existant entre, d'une part, le vecteur vitesse horizontale $\vec{V_2}$ du deuxième aéronef et, d'autre part, celui $\vec{X_2 b}$ des côtés $\vec{X_2 b}$, $\vec{X_2 c}$ de l'angle sous lequel le deuxième aéronef voit le cercle de protection $C_1$ du premier aéronef, dont l'orientation est la plus éloignée de celle du vecteur vitesse horizontale $\vec{V_2}$ du deuxième aéronef ;

$$\vec{\varphi_c} = (\vec{V_2}, \vec{X_2 c})$$

ledit test consistant à vérifier l'inégalité:

$$\left| \sin \vec{\varphi_c} \right| < \frac{\left\| \vec{V_1} \right\|}{\left\| \vec{V_2} \right\|}$$

et,
au cas où cette inégalité n'est pas vérifiée,
- la détermination d'une unique valeur d'angle de cap $\vec{\Theta_{1b}}$ à suivre par le premier aéronef, sans changer le module de son vecteur vitesse horizontale pour amener le vecteur $\vec{V_{rel}}$ de la vitesse horizontale du deuxième aéronef relativement au premier sur le côté $\vec{X_2 b}$ de l'angle sous lequel le deuxième aéronef voit le cercle de protection $C_1$ du premier, dont l'orientation est la plus proche de celle du vecteur vitesse horizontale $\vec{V_2}$ du deuxième aéronef.

au cas où cette inégalité est vérifiée,

- la détermination de deux nouvelles valeurs d'angle de cap $\overrightarrow{\Theta_{1b}}$ et $\overrightarrow{\Theta_{1c}}$ à suivre par le premier aéronef, sans changer son module de vitesse horizontale pour amener le vecteur $\overrightarrow{V_{rel}}$ de la vitesse horizontale du deuxième aéronef relativement au premier sur l'un des côtés $\overrightarrow{X_2b}$, $\overrightarrow{X_2c}$ de l'angle sous lequel le deuxième aéronef voit le cercle de protection $C_1$ du premier, l'une sur l'un $\overrightarrow{X_2b}$ des côtés, l'autre sur l'autre côté $\overrightarrow{X_2c}$.

3. Procédé selon la revendication 1, **caractérisé en ce que**, dans le cas où plus d'une nouvelle valeur d'angle de cap $\overrightarrow{\Theta_{1b}}$ et $\overrightarrow{\Theta_{1c}}$ à suivre par le premier aéronef, sans changer son module de vitesse horizontale pour amener le vecteur $\overrightarrow{V_{rel}}$ de la vitesse horizontale du deuxième aéronef relativement au premier sur l'un des côtés $\overrightarrow{X_2b}$, $\overrightarrow{X_2c}$ de l'angle sous lequel le deuxième aéronef voit le cercle de protection du premier, ont été déterminées au cours de l'étape de détermination d'au moins une nouvelle valeur d'angle de cap, l'étape de détermination d'au moins une trajectoire d'évitement consiste en la détermination de deux trajectoires d'évitement, une pour chacune des deux nouvelles valeurs d'angle de cap $\overrightarrow{\Theta_{1b}}$ et $\overrightarrow{\Theta_{1c}}$.

4. Procédé selon la revendication 1, **caractérisé en ce qu'**il comporte en outre, lorsque l'étape de détermination d'au moins une trajectoire d'évitement aboutit à la détermination de plus d'une trajectoire d'évitement, une étape supplémentaire de sélection de la trajectoire d'évitement à mettre en oeuvre consistant à choisir parmi les trajectoires d'évitement élaborées, celle qui minimise l'allongement de la route initiale du premier aéronef.

5. Procédé selon la revendication 1, **caractérisé en ce que** la ou les trajectoires d'évitement déterminées au cours de l'étape de détermination d'au moins une trajectoire d'évitement comportent une deuxième partie de rejointe de la route initiale débutant, à partir du point tournant $P_T$ marquant la fin de la première partie d'esquive de cette trajectoire d'évitement, par un segment rectiligne suivant un nouveau cap présentant, par rapport au cap de la route initiale, un écart angulaire opposé à celui du segment rectiligne de la première partie d'esquive de ladite trajectoire d'évitement.

6. Procédé selon la revendication 5, **caractérisé en ce que** le point tournant $P_T$ assurant, au sein d'une trajectoire évitement, la transition entre la fin du segment rectiligne de la première partie d'esquive et le segment rectiligne débutant la deuxième partie de rejointe de la route initiale, est choisi, sur le segment rectiligne de la première partie d'esquive, suffisamment éloigné d'un point $C_{PA1}$ où la distance de séparation entre les deux aéronefs passe par un minimum égal à la distance minimale de sécurité S, pour que la distance de séparation entre les deux aéronefs ne passe pas en dessous de la distance minimale de sécurité S lors du parcours, par le premier aéronef, du segment rectiligne débutant la deuxième partie de rejointe de ladite trajectoire d'évitement.

7. Procédé selon la revendication 1, **caractérisé en ce que**, le module du demi-angle $\left\|\overrightarrow{\alpha_b}\right\|$ ou $\left\|\overrightarrow{\alpha_c}\right\|$ sous lequel le deuxième aéronef voit le cercle de protection $C_1$ du premier aéronef est déduit de la relation:

$$\left\|\overrightarrow{\alpha_b}\right\| = \left\|\overrightarrow{\alpha_c}\right\| = \arcsin\left(\frac{S}{\left\|\overrightarrow{X_1 X_2}\right\|}\right)$$

8. Procédé selon la revendication 1, **caractérisé en ce que** la détermination d'une nouvelle valeur d'angle de cap $\Theta_{1j}$ à suivre par le premier aéronef, sans changer de module de vitesse horizontale, pour amener le vecteur $\overrightarrow{V_{rel}}$ de la vitesse horizontale du deuxième aéronef relativement au premier sur un des côtés $\overrightarrow{X_2b}$ ou $\overrightarrow{X_2c}$, dit côté envisagé $\overrightarrow{X_2j}$, de l'angle sous lequel le deuxième aéronef voit le cercle de protection du premier, s'obtient par application d'une relation angulaire qui lie cette nouvelle valeur d'angle de cap $\Theta_{1j}$ :

- au cap $\overrightarrow{\psi}$ de la droite orientée reliant la position $X_1$ du premier aéronef à la position $X_2$ du deuxième aéronef,
- au demi-angle $\alpha_j$ sous lequel le deuxième aéronef voit le cercle de protection $C_1$ du premier aéronef, orienté de la bissectrice de l'angle sous lequel le deuxième aéronef voit le cercle de protection $C_1$ du premier aéronef constituée par la droite orientée $\overrightarrow{X_2X_1}$ reliant la position $X_2$ du deuxième aéronef à la position $X_1$ du premier aéronef, vers le côté envisagé $\overrightarrow{X_2j}$ de l'angle sous lequel le deuxième aéronef voit le cercle de protection $C_1$ du premier aéronef, et
- à l'angle orienté $\overrightarrow{\gamma_j}$ que fait le côté envisagé $\overrightarrow{X_2j}$ de l'angle sous lequel le deuxième aéronef voit le cercle de protection $C_1$ du premier aéronef, avec le nouveau vecteur $V_1^j$ recherché pour la vitesse horizontale du premier aéronef afin d'éliminer un risque de collision,

cette relation angulaire s'exprimant par la relation:

$$\overrightarrow{\Theta_{1j}} = \vec{\psi} + \vec{\alpha_j} + \vec{\gamma_j} + 2k\pi$$

sachant

- que k est un entier,
- que le vecteur $\overrightarrow{V_{rel}^{\,j}}$ vitesse horizontale du deuxième aéronef par rapport au premier aéronef, lorsqu'il parcourt le côté envisagé $\overrightarrow{X_2 j}$ de l'angle sous lequel le deuxième aéronef voit le cercle de protection $C_1$ du premier aéronef, est égal à la différence du vecteur vitesse horizontale $\overrightarrow{V_2}$ du deuxième aéronef et du vecteur recherché $V_1^{\,j}$ pour la vitesse horizontale du premier aéronef, qui, par hypothèse a le même module que le vecteur vitesse horizontal $\overrightarrow{V_1}$ du premier aéronef:

$$\left( \begin{array}{c} \overrightarrow{V_{rel}^{\,j}} = \overrightarrow{V_2} - \overrightarrow{V_1^{\,j}} \\[6pt] \left\| \overrightarrow{V_1^{\,j}} \right\| = \left\| \overrightarrow{V_1} \right\| \end{array} \right.$$

- que le demi-angle $\vec{\alpha_j}$ sous lequel le deuxième aéronef voit le cercle de protection $C_1$ du premier aéronef, orienté de la bissectrice de l'angle solide constituée par la droite orientée $\overrightarrow{X_2 X_1}$ reliant la position $X_2$ du deuxième aéronef à la position $X_1$ du premier aéronef, vers le côté envisagé $\overrightarrow{X_2 j}$ de l'angle sous lequel le deuxième aéronef voit le cercle de protection $C_1$ du premier aéronef a pour valeur:

$$\vec{\alpha_j} = \pm \arcsin\left( \frac{S}{\left\| \overrightarrow{X_1 X_2} \right\|} \right)$$

- que l'angle orienté $\vec{\gamma_j}$ que fait le côté envisagé $\overrightarrow{X_2 j}$ de l'angle sous lequel le deuxième aéronef voit le cercle de protection $C_1$ du premier aéronef, avec le nouveau vecteur $V_1^{\,j}$ recherché pour la vitesse horizontale du premier aéronef afin d'éliminer un risque de collision s'exprime, en fonction de l'angle orienté $\vec{\varphi_j}$ entre d'une part, le vecteur vitesse horizontale $\overrightarrow{V_2}$ du deuxième aéronef, et, d'autre part, le côté envisagé $\overrightarrow{X_2 j}$ de l'angle sous lequel le deuxième aéronef voit le cercle de protection $C_1$ du premier aéronef, par la relation:

$$\vec{\gamma_j} = \arcsin\left( \frac{\left\| \overrightarrow{V_2} \right\|}{\left\| \overrightarrow{V_1} \right\|} \sin\left( \overrightarrow{\varphi_j} \right) \right)$$

qu'une absence de définition de l'arcsinus signifiant une impossibilité de détermination de la nouvelle valeur d'angle de cap $\overrightarrow{\Theta_{1j}}$ recherchée, et

- que l'angle orienté $\varphi_j'$ entre d'une part, le vecteur vitesse horizontale $\overrightarrow{V_2}$ du deuxième aéronef, et, d'autre part, le côté envisagé $\overrightarrow{X_2 j}$ de l'angle sous lequel le deuxième aéronef voit le cercle de protection $C_1$ du premier aéronef, s'exprime par la relation:

$$\vec{\varphi_j} = \vec{\psi} + \vec{\alpha_j} - \vec{\theta_2} + \pi + 2k\pi$$

l'angle orienté $\vec{\theta_2}$ étant le cap du deuxième aéronef.

**9.** Procédé selon la revendication 5, **caractérisé en ce que** le point tournant $P_T$ assurant la liaison entre le segment rectiligne de la première partie d'esquive et le segment rectiligne de début de la deuxième partie de rejointe d'une trajectoire d'évitement est choisi de manière à être atteint par le premier aéronef au bout d'un délai minimum égal à:

$$t_{cpa} = -\left( \frac{\left( \overrightarrow{X_1 X_2} \right)\left( \overrightarrow{V_2} - \overrightarrow{V_1^n} \right)}{\left\| \overrightarrow{V_2} - \overrightarrow{V_1^n} \right\|^2} \right)$$

$\overrightarrow{V_1^n}$ étant le vecteur vitesse horizontale du premier aéronef lorsqu'il parcourt la première partie d'esquive de sa trajectoire d'évitement.

**10.** Procédé selon la revendication 6, **caractérisé en ce que** le point tournant $P_T$ assurant la liaison entre le segment rectiligne de la première partie d'esquive et le segment rectiligne de début de la deuxième partie de rejointe d'une trajectoire d'évitement est choisi sur le segment rectiligne de la première partie d'esquive, au-delà d'un point $C_{PA1}$ où la distance de séparation entre les deux aéronefs passe par un minimum égal à la distance minimale de sécurité S, et dont la position est déterminée par sa distance $D_{CPA1}$ du point $P_{SOM}$ marquant le début de la trajectoire d'évitement tirée de la relation :

$$D_{CPA1} = t_{cpa} \times \left\| \overrightarrow{V_1} \right\|$$

avec :

$$t_{cpa} = -\left( \frac{\left( \overrightarrow{X_1 X_2} \right)\left( \overrightarrow{V_2} - \overrightarrow{V_1^n} \right)}{\left\| \overrightarrow{V_2} - \overrightarrow{V_1^n} \right\|^2} \right)$$

$\overrightarrow{V_1^n}$ étant le vecteur vitesse horizontale du premier aéronef lorsqu'il suit le segment rectiligne de la première partie d'esquive de sa trajectoire d'évitement.

**11.** Procédé selon la revendication 10, **caractérisé en ce que**, le point tournant $P_T$ assurant la liaison entre le segment rectiligne de la première partie d'esquive et le segment rectiligne de début de la deuxième partie de rejointe d'une trajectoire d'évitement est choisi sur le segment rectiligne de la première partie d'esquive, au-delà du point $C_{PA1}$ où la distance de séparation entre les deux aéronefs passe par un minimum égal à la distance minimale de sécurité S, à une distance $D_{PT}$ de ce dernier point $C_{PA1}$ tirée de la relation:

$$D_{PT} = t_{PT} \times \left\| \overrightarrow{V_1} \right\|$$

avec:

$$t_{PT} = S \times \tan\left( \frac{\overrightarrow{\chi_{EOM}} - \left( \overrightarrow{\psi_{SOM}} + \pi + \overrightarrow{\alpha_{SOM}} \right)}{2} \right) \times \frac{1}{\left\| \overrightarrow{V_2} - \overrightarrow{V_{1SOM}} \right\|}$$

sachant:

- que $\overrightarrow{\chi_{EOM}}$ est le cap du vecteur vitesse relative du deuxième aéronef par rapport au premier, lorsque le premier aéronef entame le segment rectiligne débutant la deuxième partie d'esquive de sa trajectoire d'évitement,

- que $\overrightarrow{\psi_{SOM}}$ est le cap du segment orienté reliant la position du premier aéronef à celle du deuxième aéronef alors que le premier aéronef est au point de départ de la première partie d'esquive de sa trajectoire d'évitement après en avoir adopté le cap,
- que $\overrightarrow{\alpha_{SOM}}$ est le demi-angle d'ouverture de l'angle sous lequel le deuxième aéronef voit le cercle de protection $C_1$ du premier aéronef alors que le premier aéronef est au point de départ de la première partie d'esquive de sa trajectoire d'évitement, ce demi-angle d'ouverture étant orienté du segment orienté reliant la position du deuxième aéronef à celle du premier aéronef vers le côté de l'angle sous lequel le deuxième aéronef voit le cercle de protection $C_1$ du premier aéronef adopté pour faire passer la trajectoire du deuxième aéronef relativement au premier lorsque celui-ci décrit le segment rectiligne de la première partie d'esquive de sa trajectoire d'évitement, et
- que $\overrightarrow{V_{1\,SOM}}$ est le vecteur vitesse horizontale adopté par le premier aéronef lorsqu'il suit le segment rectiligne débutant la deuxième partie de rejointe, de sa trajectoire d'évitement.

**Claims**

1. Method for working out an avoidance path, in a horizontal plane, for a first aircraft following a first route called an initial route, so as to resolve a conflict of traffic with a second aircraft following a second route that may be identical to the first route, on the basis of the knowledge of a minimum safety distance S to be complied with between two aircraft, and of the positions $X_1$ and $X_2$ and of the horizontal speed vectors $\vec{V}_1$ and $\vec{V}_2$ of the two aircraft, said method comprising the following steps:

   the determining of the horizontal speed vector $\vec{V}_{rel}$ of the second aircraft relative to the first,

   the determining, in the horizontal plane, of a circle of protection $C_1$ around the first aircraft with the minimum safety distance S as radius,

   the testing of the intersection of the straight line supporting the horizontal speed vector $\vec{V}_{rel}$ of the second aircraft with respect to the first, with the circle of protection $C_1$ of the first aircraft,

   **characterized in that** it furthermore comprises, in the event of the intersection of the circle of protection of the first aircraft by the horizontal speed vector $\vec{V}_{rel}$ of the second aircraft relative to the first, implying a risk of collision, namely a tendency for the separation distance between the two aircraft to reduce until it goes below the minimum safety distance S, the following steps

   the determining of the angle $\vec{\alpha}_b - \vec{\alpha}_c$ at which the second aircraft sees the circle of protection $C_1$ of the first aircraft,

   the determining of a start-of-avoidance-manoeuvre point $P_{SOM}$ located on the initial route of the first aircraft and shifted downline from the current position $X_1$ of the first aircraft,

   the determining of at least one new value of heading angle $\vec{\Theta}_{1b}$ and/or $\vec{\Theta}_{1c}$ to be followed by the first aircraft, without changing the horizontal speed modulus, to bring the horizontal speed vector $\vec{V}_{rel}$ of the second aircraft relative to the first in the limit, to one of the sides $\vec{X}_2b$, $\vec{X}_2c$ of the angle at which the second aircraft sees the circle of protection $C_1$ of the first,

   the determining of at least one collision-risk avoidance path for the first aircraft comprising a first evasive part constituted by a rectilinear segment having the start-of-avoidance-manoeuvre point $P_{SOM}$ as origin, one of the new values of heading angle $\vec{\Theta}_{1b}$ or $\vec{\Theta}_{1c}$ obtained at the previous step as heading and, as end, a turning point $P_T$ chosen beyond a point $C_{PA1}$ where the separation distance between the two aircraft passes through a minimum equal to the minimum safety distance S, and, beyond the turning point $P_T$, a second homing part for rejoining the initial route.

2. Method according to Claim 1, **characterized in that** the step for determining at least one new value of heading angle comprises:

   a comparative test on the oriented angle $\vec{\Phi}_c$ existing between, firstly, the horizontal speed vector $\vec{V}_2$ of the second aircraft and, secondly, that $\vec{X}_2b$ of the sides $\vec{X}_2b$, $\vec{X}_2c$ of the angle at which the second aircraft sees the circle of protection $C_1$ of the first aircraft, whose orientation is furthest from that of the horizontal speed vector $\vec{V}_2$ of the second aircraft:

$$\vec{\Phi}_c = (\vec{V}_2, \vec{X}_2c)$$

said test consisting in checking the inequality:

$$\left| \sin\vec{\varphi}_c \right| < \frac{\left\| \vec{V}_1 \right\|}{\left\| \vec{V}_2 \right\|}$$

and

if this inequality does not check out,
the determining of a single value of heading angle $\vec{\Theta}_{1b}$ to be followed by the first aircraft, without changing the modulus of its horizontal speed vector to bring the horizontal speed vector $\vec{V}_{rel}$ of the second aircraft relative to the first to the side $\vec{X}_2b$ of the angle at which the second aircraft sees the circle of protection $C_1$ of the first, whose orientation is the closest to that of the horizontal speed vector $\vec{V}_2$ of the second aircraft.
if this inequality does check out,
the determining of two new values of heading angle $\vec{\Theta}_{1b}$ and $\vec{\Theta}_{1c}$ to be followed by the first aircraft, without changing its horizontal speed modulus to bring the horizontal speed vector $\vec{V}_{rel}$ of the second aircraft relative to the first aircraft to one of the sides $\vec{X}_2b$, $\vec{X}_2c$, of the angle at which the second aircraft sees the circle of protection $C_1$ of the first, one speed on the one $\vec{X}_2b$ of the sides, the other on the other side $\vec{X}_2c$.

3. Method according to Claim 1, **characterized in that** if more than one new value of heading angle $\Theta_{1b}$ and $\Theta_{1c}$ to be followed by the first aircraft, without changing its horizontal speed modulus to bring the horizontal speed vector $\vec{V}_{rel}$ of the second aircraft relative to the first have to one of the sides $\vec{X}_2b$, $\vec{X}_2c$ of the angle at which the second aircraft sees the circle of protection $C_1$ of the first, have been determined during the step for determining at least one new value of heading angle, the step for determining at least one avoidance path consists of the determining of two avoidance paths, one for each of the two new values of heading angle $\Theta_{1b}$ and $\Theta_{1c}$.

4. Method according to Claim 1, **characterized in that**, when the step for determining at least one avoidance path leads to the determining of more than one avoidance path, it furthermore comprises an additional step for the selection of the avoidance path to be implemented, consisting in making a choice, from among the avoidance paths worked out, of the one that minimizes the lengthening of the initial route of the first aircraft.

5. Method according to Claim 1, **characterized in that** the avoidance path or paths determined during the step for determining at least one avoidance path comprise a second homing part for rejoining the initial route, starting, from the turning point $P_T$ marking the end of the first evasive part of this avoidance path, with a rectilinear segment following a new heading which, with respect to the heading of the initial route, has an angular divergence opposite to that of the rectilinear segment of the first evasive part of said avoidance path.

6. Method according to Claim 5, **characterized in that** the turning point $P_T$ that makes the transition, within said avoidance path, between the end of the rectilinear segment of the first evasive part and the rectilinear segment starting the second homing part of the initial route, is chosen, on the rectilinear segment of the first evasive part, so that it is sufficiently far from a point $C_{PA1}$ where the separation distance between the two aircraft passes through a minimum equal to the minimum safety distance S, so that the separation distance between two aircraft does not go below the minimum safety distance S during the traversal, by the first aircraft, of the rectilinear segment starting the second homing part of said avoidance path.

7. Method according to Claim 1, **characterized in that** the modulus of the half-angle $\left\| \vec{\alpha}_b \right\|$ or $\left\| \vec{\alpha}_c \right\|$ at which the second aircraft sees the circle of protection $C_1$ of the first aircraft is deduced from the relationship:

$$\left\| \vec{\alpha}_b \right\| = \left\| \tilde{\alpha}_c \right\| = \arcsin\left( \frac{S}{\left\| X_1 X_2 \right\|} \right).$$

8. Method according to Claim 1, **characterized in that** the determining of a new value of heading angle $\vec{\Theta}_{1j}$ to be

followed by the first aircraft, without changing the horizontal speed modulus, to bring the horizontal speed vector $\vec{V}_{rel}$ of the second aircraft relative to the first to one of the sides $\vec{X}_2 b$ or $\vec{X}_2 c$, called the envisaged side $\vec{X}_{2j}$, of the angle at which the second aircraft sees the circle of protection of the first, is obtained by the application of an angular relationship that links this new value of heading angle $\vec{\Theta}_{1j}$ to:

the heading $\vec{\psi}$ of the oriented straight line connecting the position $X_1$ of the first aircraft to the position $X_2$ of the second aircraft,

the half-angle $\vec{\alpha}_i$ at which the second aircraft sees the circle of protection $C_1$ of the first aircraft, oriented from the bisector of the angle at which the second aircraft sees the circle of protection $C_1$ of the first aircraft constituted by the oriented straight line $\vec{X}_2\vec{X}_1$ connecting the position $X_2$ of the second aircraft to the position $X_1$ of the first aircraft, towards the envisaged side $\vec{X}_{2j}$ of the angle at which the second aircraft sees the circle of protection $C_1$ of the first aircraft, and

the oriented angle $\vec{\gamma}_j$ made by the envisaged side $\vec{X}_{2j}$ of the angle at which the second aircraft sees the circle of protection $C_1$ of the first aircraft, with the new vector $\vec{V}_1^j$ sought for the horizontal speed of the first aircraft in order to eliminate a risk of collision,

this angular relationship being expressed by the relationship:

$$\vec{\Theta}_{1j} = \vec{\psi} + \vec{\alpha}_j + \vec{\gamma}_j + 2k\pi$$

it being known that:

k is an integer,

the horizontal speed vector $\vec{V}_{rel}^j$ of the second aircraft with respect to the first aircraft, when it traverses the envisaged side $\vec{X}_{2j}$ of the angle at which the second aircraft sees the circle of protection $C_1$ of the first aircraft, is equal to the difference of the horizontal speed vector $\vec{V}_2$ of the second aircraft and of the vector sought $\vec{V}_1^j$ for the horizontal speed of the first aircraft which, by assumption, has the same modulus as the horizontal speed vector $\vec{V}_1$ of the first aircraft:

$$\begin{cases} \vec{V}_{rel}^j = \vec{V}_2 - \vec{V}_1^j \\ \left\| \vec{V}_1^j \right\| = \left\| \vec{V}_1 \right\| \end{cases}$$

the half-angle $\vec{\alpha}_j$ at which the second aircraft sees the circle of protection $C_1$ of the first aircraft, oriented from the bisector of the solid angle constituted by the oriented straight line $\vec{X}_2\vec{X}_1$ connecting the position $X_2$ of the second aircraft to the position $X_1$ of the first aircraft, towards the envisaged side $\vec{X}_{2j}$ of the angle at which the second aircraft sees the circle of protection $C_1$ of the first aircraft, has the value:

$$\vec{\alpha}_j = \pm \arcsin\left( \frac{S}{\left\| \vec{X}_1 \vec{X}_2 \right\|} \right)$$

the oriented angle $\vec{\gamma}_j$ made by the envisaged side $\vec{X}_{2j}$ of the angle at which the second aircraft sees the circle of protection $C_1$ of the first aircraft, with the new vector $\vec{V}_1^j$ sought for the horizontal speed of the first aircraft in order to eliminate a risk of collision, is expressed, as a function of the oriented angle $\vec{\psi}_j$ between, firstly, the horizontal speed vector $\vec{V}_2$ of the second aircraft, and, secondly, the envisaged side $\vec{X}_{2j}$ of the angle at which the second aircraft sees the circle of protection $C_1$ of the first aircraft, by the relationship:

$$\bar{\gamma}_j = arcsin\left(\frac{\left\|\vec{V}_2\right\|}{\left\|\vec{V}_1\right\|} sin(\bar{\varphi}_j)\right)$$

an absence of definition of the arcsine signifying an impossibility of determining the new value of heading angle $\vec{\Theta}_{1j}$ sought,
and

the oriented angle $\vec{\phi}_j$ between, firstly, the horizontal speed vector $\vec{V}_2$ of the second aircraft, and, secondly, the envisaged side $\vec{X}_{2j}$ of the angle at which the second aircraft sees the circle of protection $C_1$ of the first aircraft, is expressed by the relationship:

$$\vec{\phi}_{1j} = \vec{\psi} + \vec{\alpha}_j - \vec{\theta}_2 + \pi + 2k\pi$$

the oriented angle $\vec{\theta}_2$ being the heading of the second aircraft.

9.  Method according to Claim 5, **characterized in that** the turning point $P_T$ for connecting the rectilinear segment of the first evasive part and the rectilinear starting segment of the second homing part of an avoidance path is chosen so as to be reached by the first aircraft after a minimum period equal to:

$$t_{cpa} = -\left(\frac{(\vec{X}_1\vec{X}_2)(\vec{V}_2 - \vec{V}_1^n)}{\left\|\vec{V}_2 - \vec{V}_1^n\right\|^2}\right)$$

$\vec{V}_1^n$ being the horizontal speed vector of the first aircraft when it traverses the first evasive part of its avoidance path.

10. Method according to Claim 6, **characterized in that** the turning point $P_T$ for connecting the rectilinear segment of the first evasive part and the rectilinear starting segment of the second homing part of an avoidance path is chosen on the rectilinear segment of the first evasive part, beyond a point $C_{PA1}$ where the separation distance between the two aircraft passes through a minimum equal to the minimum safety distance S, and whose position is determined by its distance $D_{CPA1}$ from the point $P_{SOM}$ marking the start of the avoidance path derived from the relationship:

$$D_{CPA1} = t_{cpa} \times \left\|\vec{V}_1\right\|$$

with:

$$t_{cpa} = -\left(\frac{(\vec{X}_1\vec{X}_2)(\vec{V}_2 - \vec{V}_1^n)}{\left\|\vec{V}_2 - \vec{V}_1^n\right\|^2}\right)$$

$\vec{V}_1^n$ being the horizontal speed vector of the first aircraft when it follows the rectilinear segment of the first evasive part of its avoidance path.

11. Method according to Claim 10, **characterized in that** the turning point $P_T$ for connecting the rectilinear segment of the first evasive part and the rectilinear starting segment of the second homing part of an avoidance path is chosen on the rectilinear segment of the first evasive part, beyond the point $C_{PA1}$ where the separation distance between the two aircraft passes through a minimum equal to the minimum safety distance S, at a distance $D_{PT}$ from the latter point $C_{PA1}$ derived from the relationship:

---

$$D_{PT} = t_{PT} \times \left\| \vec{V}_1 \right\|$$

with:

$$t_{PT} = S \times tan\left(\frac{\bar{X}_{EOM} - (\vec{\psi}_{SOM} + \pi + \vec{\alpha}_{SOM})}{2}\right) \times \frac{1}{\left\| \vec{V}_2 - \vec{V}_{1SOM} \right\|}$$

it being known that:

$\vec{X}_{EOM}$ is the heading of the relative speed vector of the second aircraft with respect to the first, when the first aircraft embarks on the rectilinear segment starting the second evasive part of its avoidance path,

$\vec{\psi}_{SOM}$ is the heading of the oriented segment connecting the position of the first aircraft to that of the second aircraft while the first aircraft is at the starting point of the first evasive part of its avoidance path, after having adopted the heading thereof,

$\vec{\alpha}_{SOM}$ is the half-angle of aperture at which the second aircraft sees the circle of protection $C_1$ of the first aircraft while the first aircraft is at the starting point of the first evasive part of its avoidance path, this half-angle of aperture being oriented from the oriented segment connecting the position of the second aircraft to that of the first aircraft towards the side of the angle at which the second aircraft sees the circle of protection $C_1$ of the first aircraft adopted to obtain passage of the path of the second aircraft relative to the first, when the latter describes the rectilinear segment of the first evasive part of its avoidance path, and

$\vec{V}_{1SOM}$ is the horizontal speed vector adopted by the first aircraft when it follows the rectilinear segment starting the second homing part of its avoidance path.

**Patentansprüche**

1. Verfahren zur Berechnung einer Ausweichflugbahn, in einer horizontalen Ebene, für ein erstes Luftfahrzeug, das einer ersten Flugroute folgt, Ausgangsflugroute genannt, zur Auflösung eines Flugverkehrskonfliktes mit einem zweiten Luftfahrzeug, das einer zweiten Flugroute folgt, die mit der ersten identisch sein kann, ausgehend von der Kenntnis eines minimalen Sicherheitsabstandes S zwischen zwei Luftfahrzeugen, der zu berücksichtigen ist, und von Positionen $X_1$ und $X_2$ und horizontalen Geschwindigkeitsvektoren $\vec{V_1}$ und $\vec{V_2}$ der beiden Luftfahrzeuge, wobei das Verfahren aus den folgenden Schritten besteht:

- Bestimmung des Vektors $\vec{V_{rel}}$ der horizontalen Geschwindigkeit des zweiten Luftfahrzeuges relativ zu dem ersten,
- Bestimmung, in der horizontalen Ebene, eines Schutzkreises $C_1$ um das erste Luftfahrzeug herum, welcher als Radius den minimalen Sicherheitsabstand S aufweist,
- Überschneidungstest der Unterstützungsgeraden des Vektors $\vec{V_{rel}}$ der horizontalen Geschwindigkeit des zweiten Luftfahrzeuges im Verhältnis zu dem ersten mit dem Schutzkreis $C_1$ des ersten Luftfahrzeuges,

**dadurch gekennzeichnet, dass** es, im Fall der Überschneidung des Schutzkreises des ersten Luftfahrzeuges mit dem Vektor $\vec{V_{rel}}$ der horizontalen Geschwindigkeit des zweiten Luftfahrzeuges relativ zu dem ersten, was ein Risiko des Zusammenstoßes impliziert, das heißt eine Tendenz, dass sich der Abstand der Entfernung zwischen den beiden Luftfahrzeugen so weit verringert, dass er unter den minimalen Sicherheitsabstand S abfällt, außerdem die folgenden Schritte umfasst:

- Bestimmung des Winkels $\vec{\alpha_b}$ - $\vec{\alpha_c}$, aus welchem das zweite Luftfahrzeug den Schutzkreis $C_1$ des ersten Luftfahrzeuges sieht,
- Bestimmung eines Punktes $P_{SOM}$, des Beginns eines Ausweichmanövers, der auf der Ausgangsflugroute des ersten Luftfahrzeuges liegt, und von der aktuellen Position $X_1$ des ersten Luftfahrzeuges aus nach vorne verschoben ist,

- Bestimmung von mindestens einem neuen Winkelwert des Flugkurses $\overrightarrow{\Theta_{1b}}$ und/oder $\overrightarrow{\Theta_{1c}}$, dem das erste Luftfahrzeug folgen soll, ohne das horizontale Geschwindigkeitsmodul zu verändern, um den Vektor $\overrightarrow{V_{rel}}$ der horizontalen Geschwindigkeit des zweiten Luftfahrzeuges relativ zu dem ersten an den Grenzwert, auf eine der Seiten $\overrightarrow{X_2b}$, $\overrightarrow{X_2c}$ des Winkels zu bringen, aus welchem das zweite Luftfahrzeug den Schutzkreis $C_1$ des ersten Luftfahrzeuges sieht,

- Bestimmung von mindestens einer Flugbahn zur Vermeidung eines Kollisionsrisikos für das erste Luftfahrzeug, die einen ersten Ausweichabschnitt umfasst, der aus einem geradlinigen Segment ausgebildet ist, dessen Ursprung in dem Punkt $P_{SOM}$ des Beginns für das Ausweichmanöver liegt, das als Flugkurs einen der neuen Winkelwerte des Flugkurses $\overrightarrow{\Theta_{1b}}$ oder $\overrightarrow{\Theta_{1c}}$, die in dem vorhergehenden Schritt erhalten wurden, und als Ende einen Umkehrpunkt $P_T$ aufweist, der über einen Punkt $C_{PA1}$ hinausgehend ausgewählt wird, bei dem der Abstand der Entfernung zwischen den beiden Luftfahrzeugen über ein Minimum geht, das gleich dem minimalen Sicherheitsabstand S ist, und, über den Umkehrpunkt $P_T$ hinausgehend, einen zweiten Abschnitt zur Rückkehr auf die Ausgangsflugroute.

2. Verfahren nach Anspruch 1, **dadurch gekennzeichnet, dass** der Schritt zur Bestimmung von mindestens einem neuen Winkelwert des Flugkurses umfasst:

   einen Vergleichstest bezüglich des positiv gerichteten Winkels $\overrightarrow{\varphi_c}$, der einerseits zwischen dem horizontalen Geschwindigkeitsvektor $\overrightarrow{V_2}$ des zweiten Luftfahrzeuges und, andererseits demjenigen $\overrightarrow{X_2b}$ der Seiten $\overrightarrow{X_2b}$, $\overrightarrow{X_2c}$ des Winkels vorhanden ist, aus welchem das zweite Luftfahrzeug den Schutzkreis $C_1$ des ersten Luftfahrzeuges sieht, dessen Ausrichtung von derjenigen des horizontalen Geschwindigkeitsvektors $\overrightarrow{V_2}$ des zweiten Luftfahrzeuges am weitesten entfernt ist;

   $$\overrightarrow{\varphi_c} = (\overrightarrow{V_2}, \overrightarrow{X_2c})$$

   wobei der Test daraus besteht, die Ungleichung zu überprüfen:

   $$\left|\sin \overrightarrow{\varphi_c}\right| < \frac{\left\|\overrightarrow{V_1}\right\|}{\left\|\overrightarrow{V_2}\right\|}$$

   und,
   falls diese Ungleichheit nicht nachweisbar ist,

   - die Bestimmung eines einzigen Winkelwertes des Flugkurses $\overrightarrow{\Theta_{1b}}$, dem das erste Luftfahrzeug folgen soll, ohne das Modul seines horizontalen Geschwindigkeitsvektors zu verändern, um den Vektor $\overrightarrow{V_{rel}}$ der horizontalen Geschwindigkeit des zweiten Luftfahrzeuges relativ zu dem ersten auf die Seite $\overrightarrow{X_2b}$ des Winkels zu bringen, aus welchem das zweite Luftfahrzeug den Schutzkreis $C_1$ des ersten sieht, dessen Ausrichtung derjenigen des horizontalen Geschwindigkeitsvektors $\overrightarrow{V_2}$ des zweiten Luftfahrzeuges am nächsten liegt. falls diese Ungleichheit nachweisbar ist,
   - die Bestimmung von zwei neuen Winkelwerten des Flugkurses $\overrightarrow{\Theta_{1b}}$ und $\overrightarrow{\Theta_{1c}}$, denen das erste Luftfahrzeug folgen soll, ohne sein horizontales Geschwindigkeitsmodul zu verändern, um den Vektor $\overrightarrow{V_{rel}}$ der horizontalen Geschwindigkeit des zweiten Luftfahrzeuges relativ zu dem ersten auf eine der Seiten $\overrightarrow{X_2b}$, $\overrightarrow{X_2c}$ des Winkels zu bringen, aus welchem das zweite Luftfahrzeug den Schutzkreis $C_1$ des ersten sieht, einen auf die eine Seite $\overrightarrow{X_2b}$, den anderen auf die andere Seite $\overrightarrow{X_2c}$.

3. Verfahren nach Anspruch 1, **dadurch gekennzeichnet, dass** in dem Fall, wenn mehr als ein neuer Winkelwert des Flugkurses $\overrightarrow{\Theta_{1b}}$ und $\overrightarrow{\Theta_{1c}}$, dem das erste Luftfahrzeug folgen soll, ohne sein horizontales Geschwindigkeitsmodul zu verändern, um den Vektor $\overrightarrow{V_{rel}}$ der horizontalen Geschwindigkeit des zweiten Luftfahrzeuges relativ zu dem ersten auf eine der Seiten $\overrightarrow{X_2b}$, $\overrightarrow{X_2c}$ des Winkels zu bringen, aus welchem das zweite Luftfahrzeug den Schutzkreis des ersten sieht, im Verlauf des Schrittes zur Bestimmung von mindestens einem neuen Winkelwert des Flugkurses bestimmt wurde, der Schritt zur Bestimmung von mindestens einer Ausweichflugbahn aus der Bestimmung von zwei Ausweichflugbahnen besteht, eine für jeden der beiden neuen Winkelwerte des Flugkurses $\overrightarrow{\Theta_{1b}}$ und $\overrightarrow{\Theta_{1c}}$.

4. Verfahren nach Anspruch 1, **dadurch gekennzeichnet, dass** es, wenn der Schritt zur Bestimmung von mindestens einer Ausweichflugbahn zu der Bestimmung von mehr als einer Ausweichflugbahn führt, außerdem einen zusätzlichen Schritt zur Auswahl der zu gebrauchenden Ausweichflugbahn umfasst, der darin besteht, unter den berechneten Ausweichflugbahnen diejenige auszuwählen, welche die Ausgangsflugroute des ersten Luftfahrzeuges minimal verlängert.

5.  Verfahren nach Anspruch 1, **dadurch gekennzeichnet, dass** die Ausweichflugbahn oder die Ausweichflugbahnen, welche im Verlauf des Schrittes zur Bestimmung von mindestens einer Ausweichflugbahn bestimmt wurden, einen zweiten Abschnitt zur Rückkehr auf die Ausgangsflugroute umfassen, der, ausgehend von dem Umkehrpunkt $P_T$, der das Ende des ersten Ausweichabschnittes dieser Ausweichflugbahn markiert, mit einem geradlinigen Segment beginnt, das einem neuen Flugkurs folgt, der im Verhältnis zu dem Flugkurs der Ausgangsflugroute eine Winkelabweichung aufweist, welche zu derjenigen des geradlinigen Segments des ersten Ausweichabschnittes der Ausweichflugbahn entgegengesetzt ist.

6.  Verfahren nach Anspruch 5, **dadurch gekennzeichnet, dass** der Umkehrpunkt $P_T$, der innerhalb einer Ausweichflugbahn den Übergang zwischen dem Ende des geradlinigen Segmentes des ersten Ausweichabschnittes und dem geradlinigen Segment sicherstellt, das an dem zweiten Abschnitt der Rückkehr auf die Ausgangsflugroute beginnt, auf dem geradlinigen Segment des ersten Ausweichabschnittes weit genug von einem Punkt $C_{PA1}$ entfernt ausgewählt wird, bei dem der Abstand der Entfernung zwischen den beiden Luftfahrzeugen über ein Minimum geht, das gleich dem minimalen Sicherheitsabstand S ist, damit der Abstand der Entfernung zwischen den beiden Luftfahrzeugen nicht unter den minimalen Sicherheitsabstand S, während des Durchfliegens von dem ersten Luftfahrzeug des geradlinigen Segmentes, das an dem zweiten Abschnitt der Rückkehr von der Ausweichflugbahn beginnt, absinkt.

7.  Verfahren nach Anspruch 1, **dadurch gekennzeichnet, dass** das Modul des halben Winkels $\left\|\overrightarrow{\alpha_b}\right\|$ oder $\left\|\overrightarrow{\alpha_c}\right\|$, aus welchem das zweite Luftfahrzeug den Schutzkreis $C_1$ des ersten Luftfahrzeuges sieht, von der folgenden Beziehung abgeleitet wird:

$$\left\|\overrightarrow{\alpha_b}\right\| = \left\|\overrightarrow{\alpha_c}\right\| = arcsin\left(\frac{S}{\left\|\overrightarrow{X_1X_2}\right\|}\right).$$

8.  Verfahren nach Anspruch 1, **dadurch gekennzeichnet, dass** die Bestimmung eines neuen Winkelwertes des Flugkurses $\overrightarrow{\Theta_{1j}}$, dem das erste Luftfahrzeug folgen soll, ohne sein horizontales Geschwindigkeitsmodul zu verändern, um den Vektor $\overrightarrow{V_{rel}}$ der horizontalen Geschwindigkeit des zweiten Luftfahrzeuges relativ zu dem ersten auf eine der Seiten $\overrightarrow{X_2b}$ oder $\overrightarrow{X_2c}$, beabsichtigte Seite $\overrightarrow{X_2j}$ genannt, des Winkels zu bringen, aus welchem das zweite Luftfahrzeug den Schutzkreis des ersten sieht, durch Anwendung eines Winkelverhältnisses erhalten wird, welches diesen neuen Winkelwert des Flugkurses $\overrightarrow{\Theta_{1j}}$ verbindet:

-   mit dem Flugkurs $\vec{\psi}$ der positiv gerichteten Geraden, welche die Position $X_1$ des ersten Luftfahrzeuges mit der Position $X_2$ des zweiten Luftfahrzeuges verbindet,
-   mit dem Halbwinkel $\alpha_j$, aus welchem das zweite Luftfahrzeug den Schutzkreis $C_1$ des ersten Luftfahrzeuges sieht, der von der Winkelhalbierenden des Winkels, aus welchem das zweite Luftfahrzeug den Schutzkreis $C_1$ des ersten Luftfahrzeuges sieht, die durch die positiv gerichtete Gerade $\overrightarrow{X_2X_1}$ ausgebildet wird, welche die Position $X_2$ des zweiten Luftfahrzeuges mit der Position $X_1$ des ersten Luftfahrzeuges verbindet, bis zu der beabsichtigten Seite des Winkels $\overrightarrow{X_2j}$ ausgerichtet ist, aus welchem das zweite Luftfahrzeug den Schutzkreis $C_1$ des ersten Luftfahrzeuges sieht, und
-   mit dem positiv gerichteten Winkel $\vec{\gamma_j}$, der von der beabsichtigten Seite $\overrightarrow{X_2j}$ des Winkels, aus welchem das zweite Luftfahrzeug den Schutzkreis $C_1$ des ersten Luftfahrzeuges sieht, mit dem neuen Vektor $V_1^j$ gebildet wird, welcher für die horizontale Geschwindigkeit des ersten Luftfahrzeuges gesucht wird, um ein Kollisionsrisiko auszuschalten,

wobei dieses Winkelverhältnis durch die Beziehung ausgedrückt wird:

$$\overrightarrow{\Theta_{1j}}=\vec{\psi}+\vec{\alpha_j}+\vec{\gamma_j}+2k\pi$$

mit der Kenntnis,

- dass k eine ganze Zahl ist,
- dass der Vektor $\overrightarrow{v_{rel}^j}$ der horizontalen Geschwindigkeit des zweiten Luftfahrzeuges im Verhältnis zu dem ersten Luftfahrzeug, wenn es die beabsichtigte Seite $\overrightarrow{X_2j}$ des Winkels durchfliegt, aus welchem das zweite Luftfahrzeug den Schutzkreis $C_1$ des ersten Luftfahrzeuges sieht, gleich dem Unterschied des horizontalen Geschwindigkeitsvektors $\overrightarrow{V_2}$ des zweiten Luftfahrzeuges und des gesuchten Vektors $V_1^j$ für die horizontale Geschwindigkeit des ersten Luftfahrzeuges ist, der als Hypothese dasselbe Modul aufweist wie der horizontale Geschwindigkeitsvektor $\overrightarrow{V_1}$ des ersten Luftfahrzeuges:

$$\begin{cases} \overrightarrow{V_{rel}^j} = \overrightarrow{V_2} - \overrightarrow{V_1^j} \\ \left\| \overrightarrow{V_1^j} \right\| = \left\| \overrightarrow{V_1} \right\| \end{cases}$$

- dass der Halbwinkel $\overrightarrow{\alpha_j}$, aus welchem das zweite Luftfahrzeug den Schutzkreis $C_1$ des ersten Luftfahrzeuges sieht, der von der Winkelhalbierenden des Raumwinkels, die durch die positiv gerichtete Gerade $\overrightarrow{X_2X_1}$ ausgebildet wird, welche die Position $X_2$ des zweiten Luftfahrzeuges mit der Position $X_1$ des ersten Luftfahrzeuges verbindet, bis zu der beabsichtigten Seite des Winkels $\overrightarrow{X_2j}$ ausgerichtet ist, aus welchem das zweite Luftfahrzeug den Schutzkreis $C_1$ des ersten Luftfahrzeuges sieht, den Wert aufweist:

$$\overrightarrow{\alpha_j} = \pm\ arcsin\left( \frac{S}{\left\| \overrightarrow{X_1X_2} \right\|} \right)$$

- dass der positiv gerichtete Winkel $\overrightarrow{\gamma_j}$, der von der beabsichtigten Seite $\overrightarrow{X_2j}$ des Winkels, aus welchem das zweite Luftfahrzeug den Schutzkreis $C_1$ des ersten Luftfahrzeuges sieht, mit dem neuen Vektor $V_1^j$ gebildet wird, der für die horizontale Geschwindigkeit des ersten Luftfahrzeuges gesucht wird, um ein Kollisionsrisiko auszuschalten, in Abhängigkeit von dem positiv gerichteten Winkel $\overrightarrow{\varphi_j}$, zwischen einerseits dem horizontalen Geschwindigkeitsvektor $\overrightarrow{V_2}$ des zweiten Luftfahrzeuges und andererseits der beabsichtigten Seite des Winkels $\overrightarrow{X_2j}$, aus welchem das zweite Luftfahrzeug den Schutzkreis $C_1$ des ersten Luftfahrzeug sieht, durch die Beziehung ausgedrückt wird:

$$\overrightarrow{\gamma_j} = arcsin\left( \frac{\left\| \overrightarrow{V_2} \right\|}{\left\| \overrightarrow{V_1} \right\|}\ sin\left( \overrightarrow{\varphi_j} \right) \right)$$

- dass eine fehlende Definition des Arkussinus bedeutet, dass es unmöglich ist, einen neuen gesuchten Winkelwert des Flugkurses $\overrightarrow{\Theta_{1j}}$ zu bestimmen, und
- dass der positiv gerichtete Winkel $\varphi_j$ einerseits zwischen dem horizontalen Geschwindigkeitsvektor $\overrightarrow{V_2}$ des zweiten Luftfahrzeuges, und andererseits der beabsichtigten Seite $\overrightarrow{X_2j}$ des Winkels, aus welchem das zweite Luftfahrzeug den Schutzkreis $C_1$ des ersten Luftfahrzeuges sieht, durch die Beziehung ausgedrückt wird:

$$\overrightarrow{\varphi_j} = \overrightarrow{\psi} + \overrightarrow{\alpha_j} - \overrightarrow{\theta_2} + \pi + 2k\pi$$

- wobei der positiv gerichtete Winkel $\overrightarrow{\theta_2}$ der Flugkurs des zweiten Luftfahrzeuges ist.

9. Verfahren nach Anspruch 5, **dadurch gekennzeichnet, dass** der Umkehrpunkt $P_T$, welcher die Verbindung zwischen dem geradlinigen Segment des ersten Ausweichabschnittes und dem geradlinigen Segment des Beginns des zweiten Abschnittes der Rückkehr von einer Ausweichflugbahn sicherstellt, auf eine Weise ausgewählt wird, dass er durch das erste Luftfahrzeug innerhalb von einer minimalen Zeitdauer erreicht wird, die gleich ist:

$$t_{cpa} = -\left(\frac{\left(\overrightarrow{X_1 X_2}\right)\left(\overrightarrow{V_2} - \overrightarrow{V_1}^n\right)}{\left\|\overrightarrow{V_2} - \overrightarrow{V_1}^n\right\|^2}\right)$$

wobei $\overrightarrow{V_1}^n$ der horizontale Geschwindigkeitsvektor des ersten Luftfahrzeuges ist, wenn es durch den ersten Ausweichabschnitt seiner Ausweichflugbahn fliegt.

10. Verfahren nach Anspruch 6, **dadurch gekennzeichnet, dass** der Umkehrpunkt $P_T$, welcher die Verbindung zwischen dem geradlinigen Segment des ersten Ausweichabschnittes und dem geradlinigen Segment des Beginns des zweiten Abschnittes der Rückkehr von einer Ausweichflugbahn sicherstellt, auf dem geradlinigen Segment des ersten Ausweichabschnittes über einen Punkt $C_{PA1}$ hinausgehend ausgewählt wird, bei dem der Abstand der Entfernung zwischen den beiden Luftfahrzeugen über ein Minimum geht, das gleich dem minimalen Sicherheitsabstand S ist, und dessen Position durch seinen Abstand $D_{CPA1}$ von dem Punkt $P_{SOM}$ bestimmt wird, der den Beginn der Ausweichflugbahn markiert, der aus der Beziehung abgeleitet wird:

$$D_{CPA1} = t_{cpa} \times \left\|\overrightarrow{V_1}\right\|$$

mit:

$$t_{cpa} = -\left(\frac{\left(\overrightarrow{X_1 X_2}\right)\left(\overrightarrow{V_2} - \overrightarrow{V_1}^n\right)}{\left\|\overrightarrow{V_2} - \overrightarrow{V_1}^n\right\|^2}\right)$$

wobei $\overrightarrow{V_1}^n$ der horizontale Geschwindigkeitsvektor des ersten Luftfahrzeuges ist, wenn es dem geradlinigen Segment des ersten Ausweichabschnittes seiner Ausweichflugbahn folgt.

11. Verfahren nach Anspruch 10, **dadurch gekennzeichnet, dass** der Umkehrpunkt $P_T$, welcher die Verbindung zwischen dem geradlinigen Segment des ersten Ausweichabschnittes und dem geradlinigen Segment des Beginns des zweiten Abschnittes der Rückkehr von einer Ausweichflugbahn sicherstellt, auf dem geradlinigen Segment des ersten Ausweichabschnittes über den Punkt $C_{PA1}$ hinausgehend ausgewählt wird, bei dem der Abstand der Entfernung zwischen den beiden Luftfahrzeugen über ein Minimum geht, das gleich dem minimalen Sicherheitsabstand S ist, in einem Abstand $D_{PT}$ von diesem letzten Punkt $C_{PA1}$, der aus der Beziehung abgeleitet wird:

$$D_{PT} = t_{PT} \times \left\|\overrightarrow{V_1}\right\|$$

mit:

$$t_{PT} = S \times \tan\left(\frac{\overrightarrow{\chi_{EOM}} - \left(\overrightarrow{\psi_{SOM}} + \pi + \overrightarrow{\alpha_{SOM}}\right)}{2}\right) \times \frac{1}{\left\|\overrightarrow{V_2} - \overrightarrow{V_{1SOM}}\right\|}$$

mit der Kenntnis:

- dass $\overrightarrow{\chi_{EOM}}$ der Flugkurs des relativen Geschwindigkeitsvektors des zweiten Luftfahrzeuges im Verhältnis zu dem ersten ist, wenn das erste Luftfahrzeug das geradlinige Segment beginnt, das den Beginn des zweiten Ausweichabschnittes seiner Ausweichflugbahn darstellt,
- dass $\overrightarrow{\psi_{SOM}}$ der Flugkurs des positiv gerichteten Segmentes ist, das die Position des ersten Luftfahrzeuges mit derjenigen des zweiten Luftfahrzeuges verbindet, während sich das erste Luftfahrzeug an dem Ausgangspunkt des ersten Ausweichabschnittes seiner Ausweichflugbahn befindet, nachdem es den Flugkurs davon aufgenommen hat,

- dass $\overrightarrow{\alpha_{SOM}}$ der Öffnungshalbwinkel des Winkels ist, aus welchem das zweite Luftfahrzeug den Schutzkreis $C_1$ des ersten Luftfahrzeuges sieht, während sich das erste Luftfahrzeug an dem Ausgangspunkt des ersten Ausweichabschnittes seiner Ausweichflugbahn befindet,

wobei dieser Öffnungshalbwinkel von dem positiv gerichteten Segment, das die Position des zweiten Luftfahrzeuges mit derjenigen des ersten Luftfahrzeuges verbindet, bis zu der Seite des Winkels ausgerichtet ist, aus welchem das zweite Luftfahrzeug den Schutzkreis $C_1$ des ersten Luftfahrzeuges sieht, der angenommen wurde, um die Flugbahn des zweiten Luftfahrzeuges relativ zu dem ersten Luftfahrzeug zu umfliegen, wenn dieses das geradlinige Segment des ersten Ausweichabschnittes seiner Ausweichflugbahn befliegt, und

- dass $\overrightarrow{V_{1SOM}}$ der horizontale Geschwindigkeitsvektor ist, der von dem ersten Luftfahrzeug angenommen wird, wenn es dem geradlinigen Segment folgt, das den Beginn des zweiten Abschnittes der Rückkehr von seiner Ausweichflugbahn darstellt.

FIG.1

FIG.3

FIG. 2

FIG.4

FIG.5

FIG. 6a

FIG. 6b

EP 1 287 514 B1

PRISE EN COMPTE PÉRIODIQUE DES POSITIONS / VECTEURS VITESSE DE L'AÉRONEF $A_1$ ET DES AÉRONEFS $A_2, \cdots A_i, \cdots A_n$ ÉVOLUANT AUTOUR — 20

$X_1, X_2, \cdots X_n$     $\vec{V_1}, \vec{V_2}, \cdots \vec{V_n}$

DÉTECTION DE CONFLIT $A_1 - A_i$ — 21   NON

OUI

ATTRIBUTION DE LA MANŒUVRE À L'AÉRONEF $A_1$ — 22   NON

OUI    MISE À JOUR

23 — DÉTERMINATION DU OU DES DEUX CAPS POSSIBLES D'ESQUIVE

24 — DÉTERMINATION DE LA OU DES DEUX TRAJECTOIRES D'ÉVITEMENT CORRESPONDANTES

CHOIX DE LA TRAJECTOIRE D'ÉVITEMENT LA PLUS COURTE — 25

PROPOSITION DE LA TRAJECTOIRE D'ÉVITEMENT RETENUE AU PILOTE — 26

VALIDATION PILOTE ? — 27   NON

OUI

ACTIVATION DE LA TRAJECTOIRE D'ÉVITEMENT VALIDÉE — 28

FIG.7

40